# EUROPEAN PATENT APPLICATION

(11) **EP 2 493 195 A1**
(43) Date of publication of application: **29.08.2012**
(21) Application number: 10824754.5
(22) Date of filing: 17.09.2010
(51) Int. Cl.: H04N 7/32

(54) **VIDEO ENCODING DEVICE, VIDEO DECODING DEVICE, AND DATA STRUCTURE**

(30) Priority: 20.10.2009 JP 2009241827
(71) Applicant: Sharp Kabushiki Kaisha, Osaka-shi, Osaka 545-8522 (JP)
(72) Inventor: KITAURA, Yoshihiro, Osaka-shi Osaka 545-8522 (JP); IKAI, Tomohiro, Osaka-shi Osaka 545-8522 (JP)
(74) Representative: Müller - Hoffmann & Partner
(86) International application number: PCT/JP2010/066245
(87) International publication number: WO 2011/048903

(57) **Abstract**

As a prediction vector is set a prediction vector selected from one of a first prediction vector candidate and a prediction vector candidate in accordance with an encoding cost. The prediction vector candidate is a prediction vector candidate selected from one of a second prediction vector candidate and a third prediction vector candidate in accordance with a predictive accuracy of the third prediction vector candidate. The first prediction vector candidate is a median of motion vectors assigned to respective partitions surrounding a target partition. The second prediction vector candidate is a motion vector assigned to a partition adjacent to a left side of the target partition. The third prediction vector candidate is a motion vector assigned to a collocate partition identical in location to the target partition of a decoded frame.

## Description

### Technical Field

The present invention relates to a video encoding device for encoding a video so as to create encoded data. The present invention also relates to a video decoding device for decoding encoded data created by such a video encoding device.

### Background Art

A video is efficiently transmitted or stored by use of a video encoding device. The video encoding device encodes a video by means of motion compensation prediction employing a motion vector. The video encoding device employs, for example, H264/AVC for encoding a video by means of the motion compensation prediction.

The following technique of encoding a video has been conventionally known. Each frame of a video to be inputted is divided into a plurality of partitions that include (i) a partition to be encoded (hereinafter referred to as a "target partition"), (ii) a partition adjacent to a left side of the target partition, (iii) a partition adjacent to an upper side of the target partition and (iv) a partition located in an upper right side of the target partition. A prediction vector to be assigned to the target partition is estimated by use of a median (medium value) of motion vectors assigned to respective of (a) the partition adjacent to the left side of the target partition, (b) the partition adjacent to the upper side of the target partition and (c) the partition located in the upper right side of the target partition. A difference between the target partition and the motion vectors is encoded.

Non Patent Literature 1 discloses a technique called MV Competition that is a technique of more efficiently encoding a motion vector. According to MV Competition, a prediction vector candidate (called a "temporal prediction vector candidate") to be assigned to a target partition is created by use of a median of (i) a motion vector assigned to a collocate partition which is (a) a partition of a frame that is the previous frame of a frame containing the target partition to be encoded and (b) identical in location to the target partition and (ii) motion vectors assigned to respective partitions surrounding the collocate partition. Of the temporal prediction vector candidate and a prediction vector candidate (called a "spatial prediction vector candidate") estimated by means of the technique that has been conventionally known, a prediction vector candidate with high encoding efficiency becomes a prediction vector.

### Citation List

### Non Patent Literature

Non Patent Literature 1
   ITU-T T09-SG16-VCEG-AC06 "Competition-Based Scheme for Motion Vector Selection and Coding" (Publication Date: July 2006)

### Summary of Invention

### Technical Problem

However, according to the technique disclosed in Non Patent Literature 1, even a temporal motion vector poor in accuracy, that is, a temporal prediction vector candidate dissimilar to a motion vector to be assigned to a target partition is employed as a prediction vector candidate. Further, according to MV Competition, a flag indicative of which prediction vector candidate has been selected from a plurality of prediction vector candidates as a prediction vector for use in encoding is encoded. Therefore, an encoding efficiency is possibly lowered by quantity of the flag encoded, in a case where a motion vector candidate poor in accuracy is employed.

A predictive accuracy of the temporal prediction vector candidate is possibly lowered in a case where, for example, a size of a target partition is small or a motion vector assigned to the target partition is long. However, a conventional technique does not consider such a possibility.

The present invention was made in view of the problem, and an object of the present invention is to realize a video encoding device with high encoding efficiency. The encoding efficiency is improved by improving a predictive accuracy of a prediction victor candidate, which predictive accuracy is improved by narrowing a prediction vector candidate(s) with no use of a flag.

### Solution to Problem

In order to attain the object, a video encoding device of the present invention is a video encoding device for encoding, together with a video, a difference vector between respective prediction vectors and respective motion vectors, the prediction vectors and the motion vectors being assigned to respective partitions into which each of frames, of which the video is made up, is divided, the prediction vector being a prediction vector selected from one of a first prediction vector candidate and a prediction vector candidate in accordance with an encoding cost, the first prediction vector candidate being a median of motion vectors assigned to respective of a left partition adjacent to a left side of a target partition, an upper partition adjacent to an upper side of the target partition, and an upper right partition adjacent to a right side of the upper partition, the prediction vector candidate being a prediction vector candidate selected from one of a second prediction vector candidate and a third prediction vector candidate in accordance with a predictive accuracy of the third prediction vector candidate, the second prediction vector candidate being the motion vector assigned to the left partition, the third prediction vector candidate being a motion vector assigned to a collocate partition identical in location to the target partition of an encoded frame.

The above-configured video encoding device of the present invention can (i) select one of the second prediction vector candidate and the third prediction vector candidate in accordance with the predictive accuracy of the third prediction vector candidate that corresponds to a temporal prediction vector candidate of Non Patent Literature 1, (ii) select, in accordance with the encoding cost, one of (a) the first prediction vector candidate corresponding to a spatial prediction vector candidate of Non Patent Literature 1 and (b) the prediction vector candidate selected from the second prediction vector candidate and the third prediction vector candidate, and (iii) set a selected prediction vector candidate as a prediction vector to be assigned to the target partition. Therefore, the video encoding device of the present invention can create encoded data with high encoding efficiency, even in a case where (I) the predictive accuracy of the third prediction vector candidate, which corresponds to the temporal prediction vector candidate of Non Patent Literature 1, is lowered or (II) an encoding cost of the first prediction vector candidate, which corresponds to the spatial prediction vector candidate of Non Patent Literature 1, is increased.

A video decoding device of the present invention is A video decoding device for decoding encoded data obtained by encoding, together with a video, a difference vector between respective prediction vectors and respective motion vectors, the prediction vectors and the motion vectors being assigned to respective partitions into which each of frames, of which the video is made up, is divided, said video decoding device, including: first calculating means for setting, as a first prediction vector candidate that becomes a prediction vector candidate to be assigned to a target partition, a median of motion vectors assigned to respective of a left partition adjacent to a left side of the target partition, an upper partition adjacent to an upper side of the target partition, and an upper right partition adjacent to a right side of the upper partition; second calculating means for setting, as a second prediction vector candidate that becomes the prediction vector candidate to be assigned to the target partition, the motion vector assigned to the left partition; third calculating means for setting, as a third prediction vector candidate that becomes the prediction vector candidate to be assigned to the target partition, a motion vector assigned to a collocate partition identical in location to the target partition of a decoded frame; first selecting means for selecting one of the second prediction vector candidate and the third prediction vector candidate in accordance with a predictive accuracy of the third prediction vector candidate; and second selecting means for (i) selecting, in accordance with a flag contained in the encoded data, one of the first prediction vector candidate and a prediction vector candidate selected by the first selecting means and (ii) setting, as the prediction vector to be assigned to the target partition, a selected one of the first prediction vector candidate and the prediction vector candidate.

The above-configured video decoding device of the present invention includes the first selecting means for selecting one of the second prediction vector candidate and the third prediction vector candidate in accordance with the predictive accuracy of the third prediction vector candidate. Therefore, the video decoding device of the present invention can select one of the second prediction vector candidate and the third prediction vector candidate in accordance with the predictive accuracy of the third prediction vector candidate.

The above-configured video decoding device of the present invention includes the second selecting means for (i) selecting, with reference to the flag contained in the encoded data, one of the first prediction vector candidate and the prediction vector candidate selected by the first selecting means and (ii) setting, as the prediction vector to be assigned to the target partition, the selected one of the first prediction vector candidate and the prediction vector candidate. Therefore, the video decoding device of the present invention can decode encoded data created at a high encoding efficiency, even in a case where (I) the predictive accuracy of the third prediction vector candidate is lowered or (II) an encoding cost of the first prediction vector candidate is increased.

A data structure of encoded data of the present invention is a data structure of encoded data obtained by encoding, together with a video, a difference vector between respective prediction vectors and respective motion vectors, the prediction vectors and the motion vectors being assigned to respective partitions into which each of frames, of which the video is made up, is divided, the prediction vector being a prediction vector selected from one of a first prediction vector candidate and a prediction vector candidate in accordance with an encoding cost, the first prediction vector candidate being a median of motion vectors assigned to respective of a left partition adjacent to a left side of a target partition, an upper partition adjacent to an upper side of the target partition, and an upper right partition adjacent to a right side of the upper partition, the prediction vector candidate being a prediction vector candidate selected from one of a second prediction vector candidate and a third prediction vector candidate in accordance with a predictive accuracy of the third prediction vector candidate, the second prediction vector candidate being the motion vector assigned to the left partition, the third prediction vector candidate being a motion vector assigned to a collocate partition identical in location to the target partition of an encoded frame.

The data structure of the encoded data allows a decoding device for decoding the encoded data to select one of the second prediction vector candidate or the third prediction vector candidate in accordance with the predictive accuracy of the third prediction vector candidate. It is therefore possible to obtain encoded data with high decoding efficiency.

### Advantageous Effects of Invention

A video encoding device of the present invention is a video encoding device for encoding, together with a video, a difference vector between respective prediction vectors and respective motion vectors, the prediction vectors and the motion vectors being assigned to respective partitions into which each of frames, of which the video is made up, is divided, the prediction vector being a prediction vector selected from one of a first prediction vector candidate and a prediction vector candidate in accordance with an encoding cost, the first prediction vector candidate being a median of motion vectors assigned to respective of a left partition adjacent to a left side of a target partition, an upper partition adjacent to an upper side of the target partition, and an upper right partition adjacent to a right side of the upper partition, the prediction vector candidate being a prediction vector candidate selected from one of a second prediction vector candidate and a third prediction vector candidate in accordance with a predictive accuracy of the third prediction vector candidate, the second prediction vector candidate being the motion vector assigned to the left partition, the third prediction vector candidate being a motion vector assigned to a collocate partition identical in location to the target partition of an encoded frame. According to the configuration, it is possible to create encoded data with high encoding efficiency even in a case where (i) the predictive accuracy of the third prediction vector candidate, which corresponds to a temporal prediction vector candidate of Non Patent Literature 1, is lowered or (ii) an encoding cost of the first prediction vector candidate, which corresponds to a spatial prediction vector candidate of Non Patent Literature 2, is increased.

### Brief Description of Drawings

Fig. 1

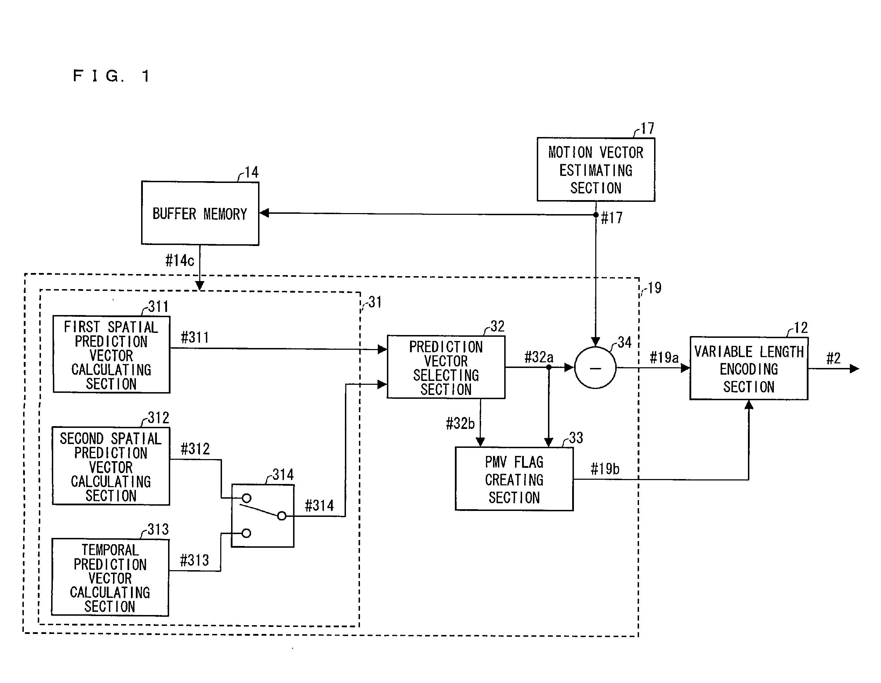

Fig. 1 is a block diagram showing a configuration of a motion vector redundancy reducing section of a video encoding device of an embodiment.
Fig. 2

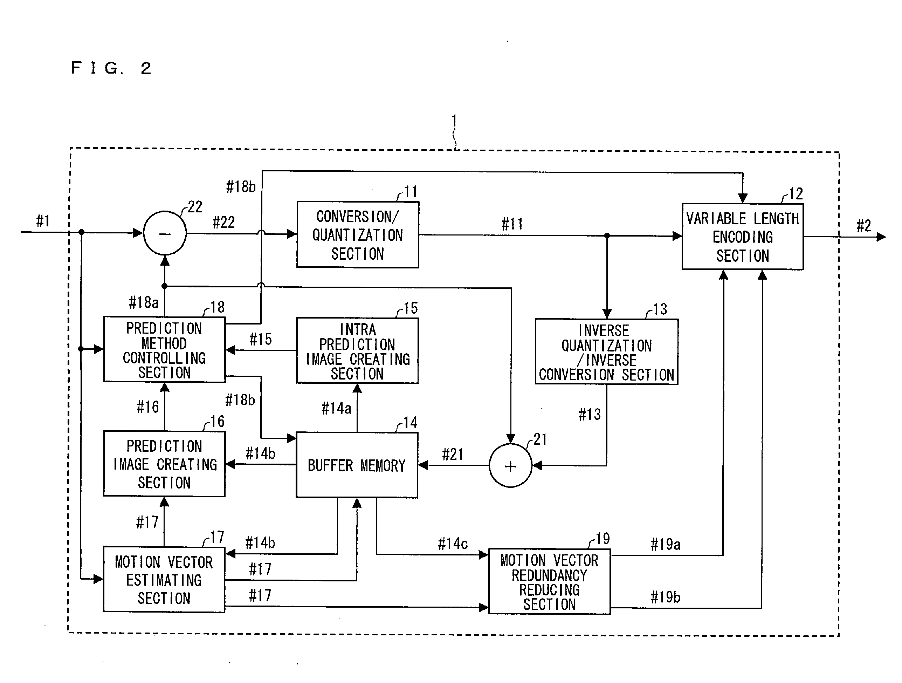

Fig. 2 is a block diagram showing a configuration of a video encoding device of an embodiment.
Fig. 3

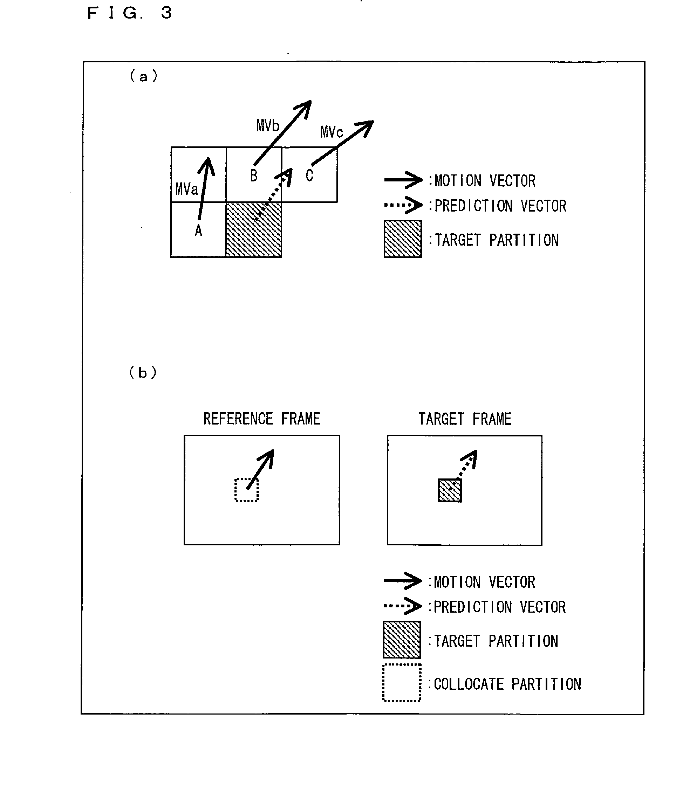

Fig. 3 is an explanatory view of how a motion vector redundancy reducing section of a video encoding device of an embodiment operates. (a) of Fig. 1 shows (i) motion vectors assigned to respective partitions surrounding a target partition and (ii) a prediction vector to be assigned to the target partition. (b) of Fig. 3 shows a target partition, a prediction vector to be assigned to the target partition, a collocate partition, and a motion vector assigned to the collocate partition.
Fig. 4

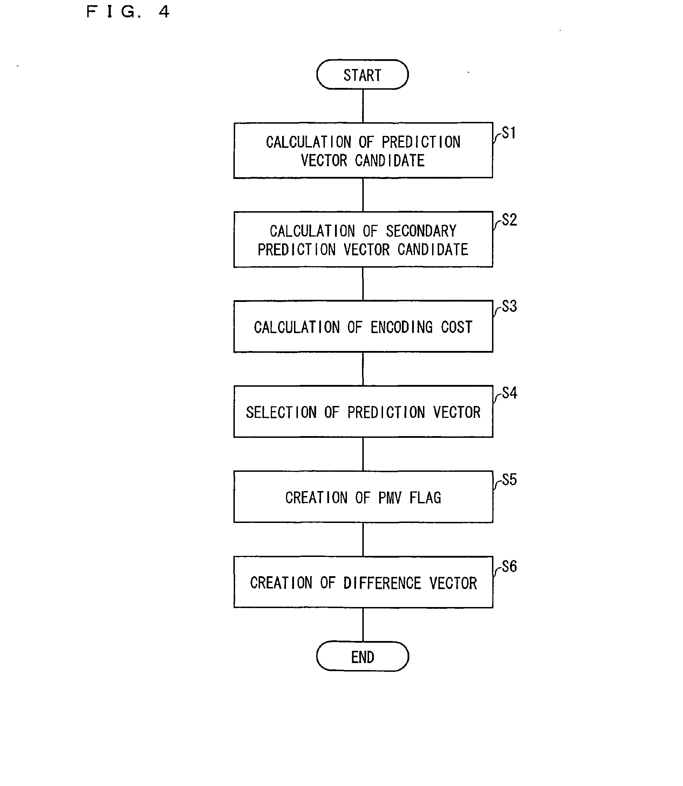

Fig. 4 is a flowchart showing an example 1 of how a motion vector redundancy reducing section of a video encoding device of an embodiment operates.
Fig. 5

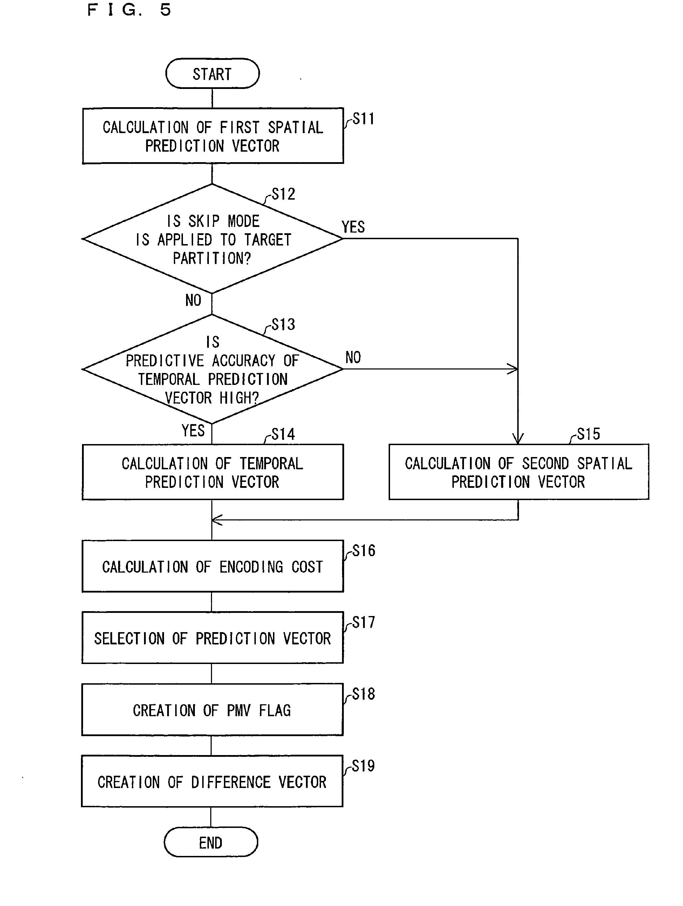

Fig. 5 is a flowchart showing an example 2 of how the motion vector redundancy reducing section of the video encoding device of the embodiment operates.
Fig. 6

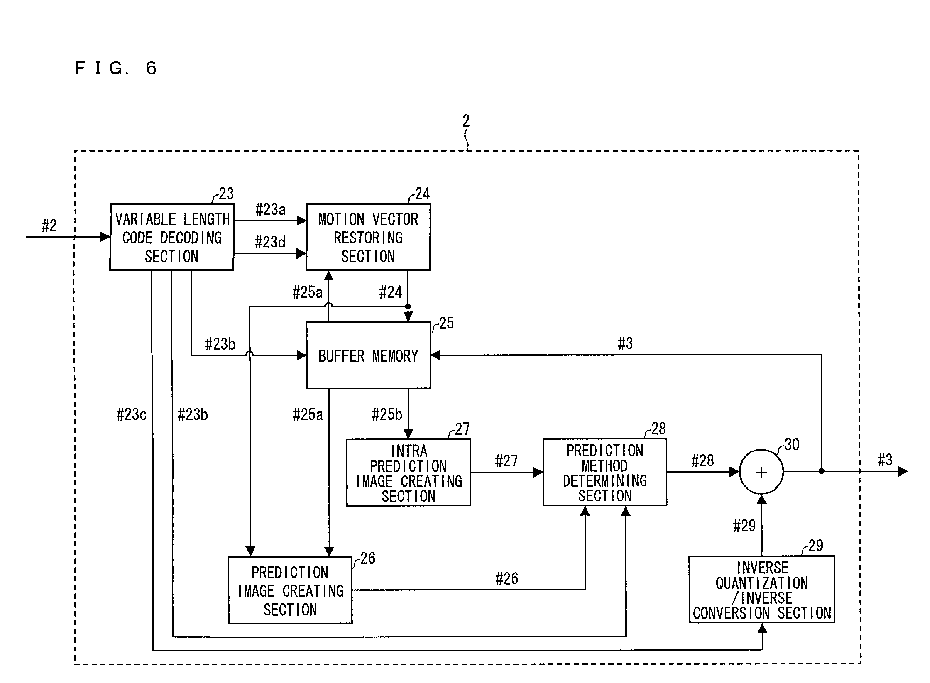

Fig. 6 is a block diagram showing a configuration of a video decoding device of an embodiment.
Fig. 7

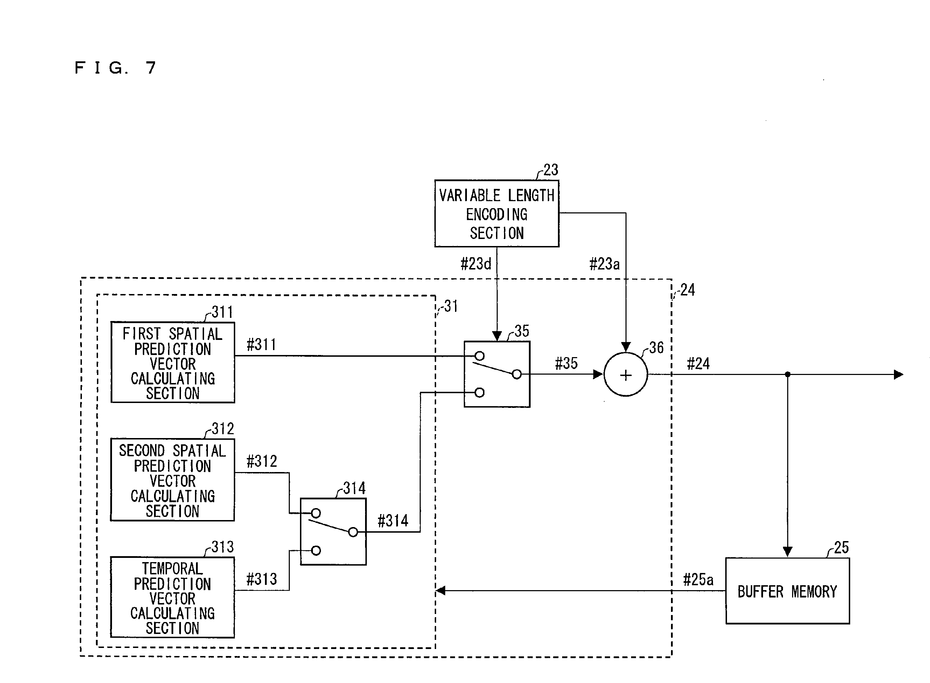

Fig. 7 is a block diagram showing a configuration of a motion vector restoring section of a video decoding section of an embodiment.
Fig. 8

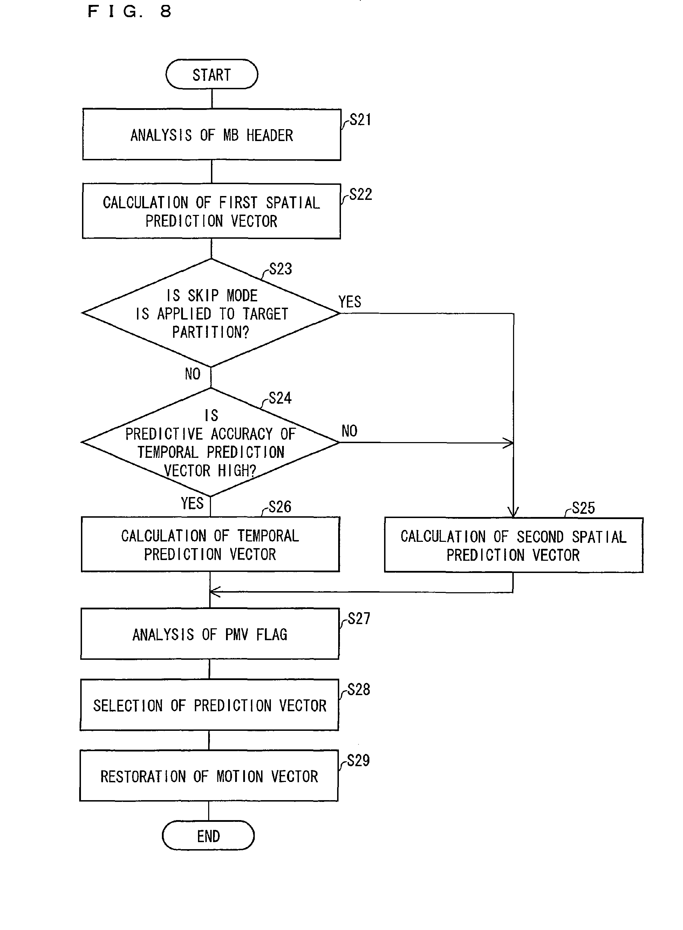

Fig. 8 is a flowchart showing an operation of a motion vector restoring section of a video decoding device of an embodiment.
Fig. 9

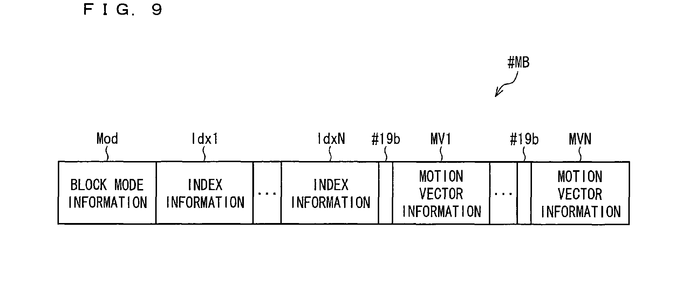

Fig. 9 is a view showing a bit stream of each macro block of encoded data of the present invention.
Fig. 10

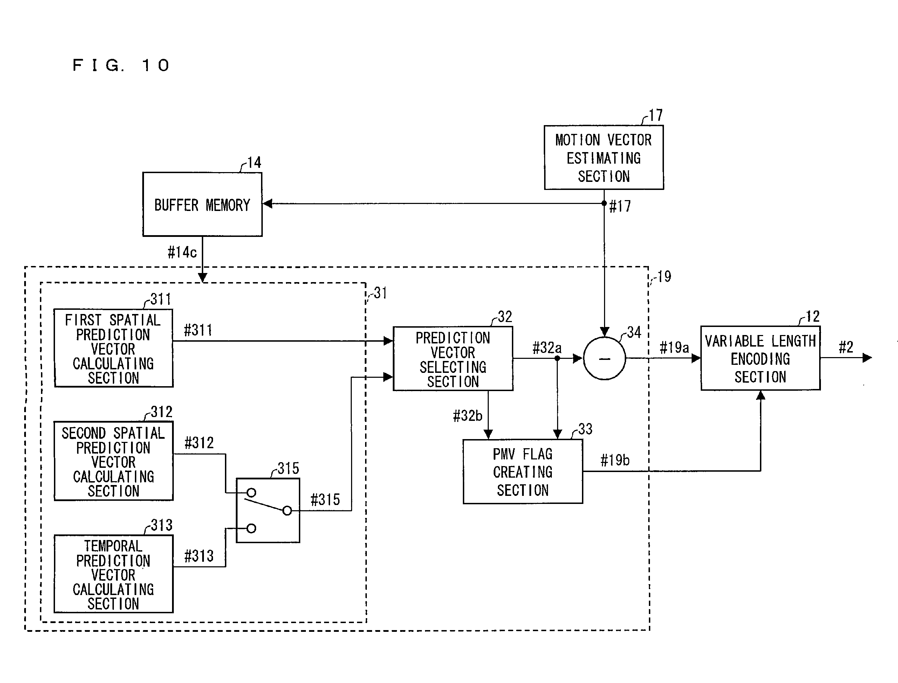

Fig. 10 is a block diagram showing a configuration of a motion vector redundancy reducing section of a video decoding device of Modified Example 1 of an embodiment.
Fig. 11

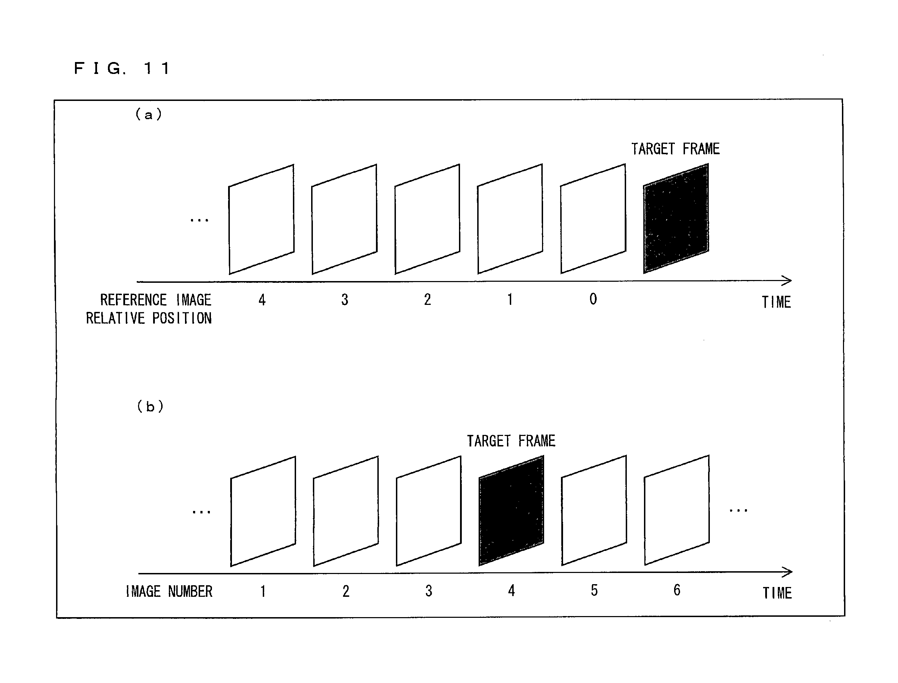

Fig. 11 is an explanatory view of how the motion vector redundancy reducing section of the video decoding device of Modified Example 1 of the embodiment operates. (a) of Fig. 11 shows reference image relative positions assigned to respective frames that had been encoded before a target frame was encoded. (b) of Fig. 11 shows image numbers attached to a target frame and frames adjacent to the target frame.
Fig. 12

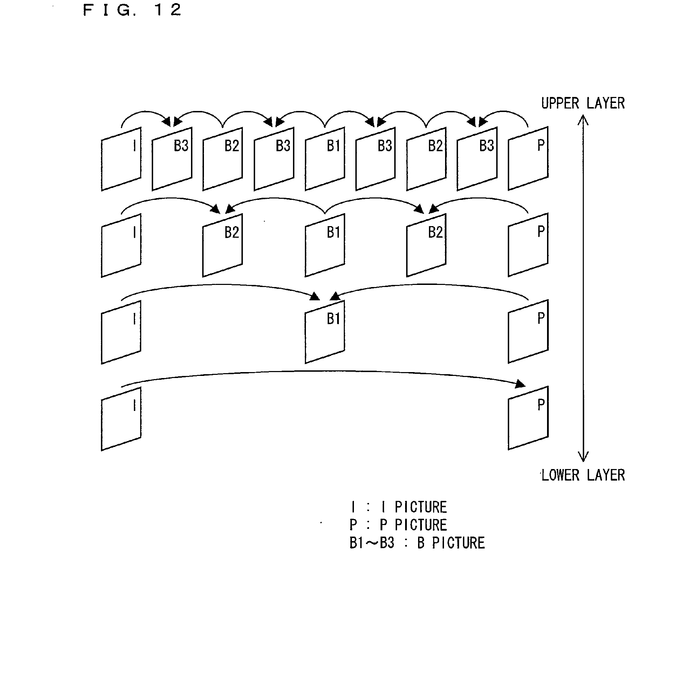

Fig. 12 is an explanatory view of how a motion vector redundancy reducing section of a video decoding device of Modified Example 3 of the embodiment operates, and a view showing a GOP structure made up of layered B pictures.

### Description of Embodiments

The following description will discuss a configuration of a video encoding device 1 of Embodiment 1 with reference to Figs. 1 through 5.

Fig. 2 is a block diagram showing the configuration of the video encoding device 1.

As shown in Fig. 2, the video encoding device 1 includes a conversion/quantization section 11, a variable length encoding section 12, an inverse quantization/inverse conversion section 13, a buffer memory 14, an intra prediction image creating section 15, a prediction image creating section 16, a motion vector estimating section 17, a prediction method controlling section 18, a motion vector redundancy reducing section 19, an adder 21, and a subtracter 22.

The video encoding device 1 sequentially receives an input image #1. The input image #1 is an image signal for a corresponding frame of video data. The input image #1 is, for example, an image signal for a corresponding frame of a progressive signal of 60 Hz.

The image encoding device 1 conducts an encoding process with respect to the input image #1, and then outputs encoded data #2.

The conversion/quantization section 11 carries out a DCT (Discrete Cosine Transform) conversion with respect to a difference image #22 between (i) the input image #1 which is divided into a plurality of block images (hereinafter referred to as a "macro block") each made up of a plurality of adjacent pixels and (ii) a prediction image #18a outputted from the prediction method controlling section 18 (described later). This causes the difference image #22 to be converted into a frequency component. The conversion/quantization section 11 then quantizes the frequency component so as to create quantized prediction residual data #11. What is meant by quantization is an arithmetical operation in which each frequency component is associated with a corresponding integer. A macro block to be processed is hereinafter referred to as a "target macro block".

The macro block has a size of, for example, 16×16 pixels. Note, however, that the macro block of the present embodiment is not limited to such a specific size.

The inverse quantization/inverse conversion section 13 decodes the quantized prediction residual data #11 so as to create a prediction residual #13. Specifically, the inverse quantization/inverse conversion section 13 inversely quantizes the quantized prediction residual data #11, that is, each integer of the quantized prediction residual data #11 is associated with a corresponding frequency component, and carries out an inverse DCT conversion with respect to the corresponding frequency component, in other words, decodes a target macro block on the basis of the corresponding frequency component so as to create the prediction residual #13.

The adder 21 adds the prediction residual #13 and the prediction image #18a so as to create a decoded image #21. The decoded image #21 is stored in the buffer memory 14.

The intra prediction image creating section 15 extracts a locally decoded image #14a from the decoded image #21 stored in the buffer memory 14, and carries out an intra frame prediction on the basis of the locally decoded image # 14a so as to create an intra prediction image #15. The locally decoded image # 14a has a size of, for example, 16×16 pixels, 8×8 pixels or 4×4 pixels. Note, however, that the locally decoded image #14a of the present embodiment is not limited to such a specific size.

The motion vector predicting section 17 divides a target macro block into one or more partitions, and sequentially assigns a motion vector(s) to each of the one or more partitions. Specifically, the motion vector estimating section 17 calculates a motion vector #17 on the basis of (i) the input image #1 and (ii) an image (hereinafter, referred to as a reference image #14b) whose entire frames have been already decoded and which image has been stored in the buffer memory 14, and then assigns the motion vector #17 to a partition to be processed (hereinafter, referred to as a "target partition") out of the plurality of partitions. The motion vector estimating section 17 further calculates relative positional information of a reference image (hereinafter, referred to as a reference image relative position) with respect to each frame to which a corresponding partition belongs, and then assigns the reference image relative position to the reference image. The motion vector #17 is supplied to the prediction image creating section 16 and the motion vector redundancy reducing section 19, and is stored in the buffer memory 14.

The target partition of Embodiment 1 has a size of 16×16 pixels, 16x8 pixels, 8×16 pixels, 8×8 pixels, 8×4 pixels, 4x8 pixels or 4x4 pixels. Note, however, that the target partition of the present embodiment is not limited to such a specific size.

The motion vector estimating section 17 selects, from the above-described sizes of the target partition that constitutes the target macro block, a size of the target partition which size minimizes encoding cost. Examples of the encoding cost encompass RD cost and M cost. RD cost indicates a quantity to be calculated by an expression (D+λ×R), where D represents a residual between a locally decoded image and an input image, R represents encoding quantity of an inter prediction parameter, and a coefficient λ can be a constant or a function of a quantization parameter by which roughness of quantization is controlled. M cost indicates a quantity to be calculated by an expression (PD+A×R), where PD represents a prediction residual.

The motion vector estimating section 17 outputs (i) the size of the target partition and (ii) an index indicative of an image number of a frame containing the target partition. Note that each motion vector and each index are determined for a corresponding target partition, and are then outputted.

The motion vector estimating section 17 determines whether to apply an encoding mode called a skip mode to a target partition. What is meant by the skip mode is a mode in which quantized prediction residual data #11 is not encoded.

Specifically, the motion vector estimating section 17 applies the skip mode to a target partition (a target macro block), in a case where (i) the target partition has a size of 16×16 pixels which size is identical to that of a macro block and (ii) the encoding cost is lower than a skip threshold that is a predetermined threshold.

The prediction image creating section 16 makes a motion compensation, on the basis of the motion vector #17, with respect to each partition of the reference image #14 stored in the buffer memory 14. This causes an inter prediction image #16 to be created.

The prediction method controlling section 18 (i) makes a comparison of the intra prediction image #15, the inter prediction image #16, and the input image #1 and then (ii) selects and outputs, as a prediction image #18a, one of the intra prediction image #15 and the inter prediction image #16. The prediction method controlling section 18 also outputs a prediction mode #18b that is information indicative of which one of the intra prediction image #15 and the inter prediction image #16 has been selected. The prediction image #18a is supplied to the subtracter 22.

The prediction mode #18 is (i) stored in the buffer memory 14 and (ii) supplied to the variable length encoding section 12.

The motion vector redundancy reducing section 19 calculates a prediction vector on the basis of a motion vector group #14c that had been (i) assigned to other partitions and (ii) stored in the buffer memory 14, before the motion vector estimating section 17 assigned the motion vector #17 to the target partition. The motion vector redundancy reducing section 19 calculates a difference between the prediction vector and the motion vector #17 so as to create a difference motion vector #19a. The motion vector redundancy reducing section 19 supplies the difference motion vector #19a to the variable length encoding section 12. In a case where the prediction vector includes a plurality of prediction vectors, the motion vector redundancy reducing section 19 outputs a flag #19b indicative of which of the plurality of prediction vectors has been used to create the difference motion vector # 19a. The motion vector redundancy reducing section 19 will be described later in detail. Therefore, the motion vector redundancy reducing section 19 is not described here.

The variable length encoding section 12 carries out a variable length encoding with respect to the quantized prediction residual data #11, the difference motion vector #19a, the prediction mode #18b, and the flag #19b so as to create the encoded data #2. Note, however, that the variable length encoding section 12 does not carry out, during the skip mode, a variable length encoding with respect to the quantized prediction residual data #11.

The variable length encoding section 12 embeds, in block mode information that is a header of the encoded data #2, information indicative of whether to apply the skip mode to a target partition.

The subtracter 22 calculates a difference between the input image #1 and the prediction image #18a so as to output the difference image #22.

### (Spatial prediction vector)

Note that a prediction vector to be calculated with reference to a spatial motion vector group made up of motion vectors assigned to respective encoded partitions surrounding a target partition of a target frame, is hereinafter referred to as a spatial prediction vector. According to an example of how to calculate the spatial prediction vector with reference to the spatial motion vector group, a median is calculated with respect to motion vectors assigned to respective of (i) a left partition adjacent to a left side of a target partition, (ii) an upper partition adjacent to an upper side of the target partition, and (iii) an upper right partition adjacent to a right side of the upper partition.

Alternatively, the spatial prediction vector can be calculated by use of, for example, (i) the motion vector assigned to the left partition adjacent to the left side of the target partition, (ii) the motion vector assigned to the upper partition adjacent to the upper side of the target partition, or (iii) an average of the motion vectors assigned to the respective of (a) the left partition adjacent to the left side of the target partition, (b) the upper partition adjacent to the upper side of the target partition, and (c) the upper right partition adjacent to the right side of the upper partition.

Alternatively, the spatial prediction vector can also be calculated by use of a median (a median of a first average, a second average and a third average) of (1) an average (a first average) of (a) the motion vectors assigned to the respective of the left partition adjacent to the left side of the target partition and (b) the upper partition adjacent to the upper side of the target partition, (2) an average (a second average) of (c) the motion vectors assigned to the respective of the upper partition adjacent to the upper side of the target partition and (d) an upper right partition adjacent to the right side of the upper partition, and (3) an average (a third average) of (e) the motion vectors assigned to the respective of the left partition adjacent to the left side of the target partition and (d) the upper right partition adjacent to the right side of the upper partition adjacent to the upper side of the target partition.

The spatial prediction vector can also be calculated by use of one of the motion vectors assigned to the respective of (i) the left partition adjacent to the left side of the target partition, (ii) the upper partition adjacent to the upper side of the target partition and (iii) the upper right partition adjacent to the right side of the upper partition. The one of the motion vectors has the largest difference from the median of the motion vectors assigned to the respective of (i) the left partition adjacent to the left side of the target partition, (ii) the upper partition adjacent to the upper side of the target partition and (iii) the upper right partition adjacent to the right side of the upper partition.

Note, however, that how to calculate the spatial prediction vector is not limited to the above-described methods.

### (Temporal prediction vector)

A prediction vector to be calculated with reference to a temporal motion vector group made up of motion vectors assigned to (I) a partition identical in location to a target partition of an encoded frame (hereinafter, referred to as a collocate partition) and (II) partitions surrounding the collocate partition, is hereinafter referred to as a temporal prediction vector. According to an example method for calculating a temporal prediction vector with reference to the temporal motion vector group, a motion vector of the collocate partition identical in location to the target partition of the encoded frame is used. Specifically, the temporal prediction vector can be calculated by use of (i) a median of motion vectors assigned to respective of (a) a left partition adjacent to a left side of the collocate partition, (b) an upper partition adjacent to an upper side of the collocate partition and (c) an upper right partition adjacent to a right side of the upper partition, (ii) an average of the motion vectors, or (iii) a motion vector assigned to a partition which has been spatially displaced from the collocate partition by a median of the spatial prediction vector group or by an average of the motion vectors.

Note, however, that how to calculate the temporal prediction vector is not limited to the above-described methods.

### (Motion vector redundancy reducing section 19)

The following description will discuss a configuration of a motion vector redundancy reducing section with reference to Fig. 1, and (a) and (b) of Fig. 3.

The following description will discuss a case where a process for encoding each frame is conducted laterally, and sequentially from an upper left side of the each frame to downward. However, the present embodiment is not limited to such a specific case. Alternatively, the process can be conducted longitudinally, and sequentially from the upper left side of the each frame to rightward. In this case, the present embodiment is easily applicable by replacing "left side", "upper side", "right side", and "rightward" in the following description with "upper side", "left side", "lower side", and "downward", respectively. Note that the present embodiment is also easily applicable by substantially similar replacements even in a case where the process is conducted in other directions.

Fig. 1 is a block diagram showing a configuration of the motion vector redundancy reducing section 19. As shown in Fig. 1, the motion vector redundancy reducing section 19 includes a prediction vector candidate creating section 31, a prediction vector selecting section 32, a PMV flag creating section 33, and a subtracter 34.

The prediction vector candidate creating section 31 calculates, on the basis of the motion vector group # 14 stored in the buffer memory, a motion vector candidate that is a candidate of a motion vector to be assigned to a target partition. The prediction vector candidate creating section 31 outputs a first spatial prediction vector candidate #311, and a secondary prediction vector candidate #314. The configuration of the prediction vector candidate creating section 31 will be described later in detail. Therefore, the prediction vector candidate creating section 31 is not described here.

Note that the secondary prediction vector candidate #314 is a prediction vector selected from (i) a spatial prediction vector candidate and (ii) a temporal prediction vector candidate by taking into consideration a predictive accuracy of the temporal prediction vector candidate. The secondary prediction vector candidate #314 can be called a spatially-temporally selected prediction vector from the viewpoint of its meaning. The secondary prediction vector candidate #314 is selected, in identical manners, by an encoding device and a decoding device. As such, the secondary prediction vector candidate #314 is not selected in accordance with a flag 19b to be attached to a partition. Note that the number of the secondary prediction vector candidates #314 in Embodiment 1 is 1 (one) but can be plural, as described in Additional Description 1 (later described).

The prediction vector selecting section 32 (i) compares the first spatial prediction vector candidate #311 and the secondary prediction vector candidate #314 each supplied from the prediction vector candidate creating section 31 and then (ii) selects one of the first spatial prediction vector candidate #311 and the secondary prediction vector candidate #314. A selected prediction vector candidate is set as a prediction vector #32a to be assigned to a target partition.

More specifically, the prediction vector selecting section 32 (i) calculates an encoding cost for each of the first spatial prediction vector candidate #311 and the secondary prediction vector candidate #314, (ii) selects one of the first spatial prediction vector candidate #311 and the secondary prediction vector candidate #314, whichever is lower in encoding cost, and (iii) sets a selected one as the prediction vector #32a.

Examples of the encoding cost encompass the foregoing RD cost and the foregoing M cost. Note, however, that the encoding cost of the present embodiment is not limited to a specific one.

The prediction vector selecting section 32 (i) creates selection information #32b indicative of which one of the first spatial prediction vector candidate #311 and the secondary prediction vector candidate #314 has been selected and then (ii) supplies the selection information #32b to the PMV flag creating section 33.

The PMV flag creating section 33 creates, on the basis of the selection information #32b, a flag # 19b indicative of which one of the first spatial prediction vector candidate #311 and the secondary prediction vector candidate #314 has been selected by the prediction vector selecting section 32. The flag #19b is supplied to the variable length encoding section 12. According to the present embodiment, one-bit flag is used as the flag #19b. This is because the prediction vector selecting section 32 selects the prediction vector #32a from the two prediction vector candidates (the first spatial prediction vector candidate #311 and the secondary prediction vector candidate #314).

As such, a flag of not less than 2 bits is used as the flag #19b, in a case where the prediction vector candidate creating section 31 calculates a plurality of motion vector candidates (for example, m motion vector candidates) such as a case where the number of secondary prediction vectors is more than one.

The variable length encoding section 12 can carry out a fixed length encoding or an arithmetic encoding with respect to the flag # 19b.

According to the present embodiment, the PMV flag creating section 33 is provided separately from the variable length encoding section 12 so that the encoding of the flag #19b is explicitly shown. Instead, the variable length encoding section 12 can be configured to directly encode the selection information #32b. It follows that the PMV flag creating section 33 is included in the variable length encoding section 12.

The subtracter 34 creates a difference motion vector #19a that is a difference vector between (i) the prediction vector #32a to be assigned to the target partition, which prediction vector #32a has been set by the prediction vector selecting section 32 and (ii) the motion vector #17 assigned to the target partition by the motion vector estimating section 17. The difference motion vector #19a is supplied to the variable length encoding section 12.

### (Prediction vector candidate creating section 31)

The following description will discuss the configuration of the prediction vector candidate creating section 31 with reference to Fig. 1, and (a) and (b) of Fig. 3. As shown in Fig. 1, the prediction vector candidate creating section 31 includes a first spatial prediction vector calculating section 311, a second spatial prediction vector calculating section 312, a temporal prediction vector calculating section 313, and a prediction vector candidate selecting section 314.

The first spatial prediction vector calculating section 311 calculates a first spatial prediction vector candidate #311 by use of a median of (i) a motion vector assigned to a partition adjacent to a left side of a target block, (ii) a motion vector assigned to a partition adjacent to an upper side of the target block, and (iii) a motion vector assigned to a partition adjacent to a right side of the partition adjacent to the upper side of the target block (hereinafter, referred to as a "upper right partition of the target partition").

That is, as shown in
(a) of Fig. 3, the first spatial prediction vector calculating section 311 calculates the first spatial prediction vector candidate #311 by use of a median of (i) a motion vector MVa assigned to a partition A adjacent to a left side of a target block, (ii) a motion vector MVb assigned to a partition B adjacent to an upper side of the target block, and (iii) a motion vector MVc assigned to a partition C adjacent to a right side of the partition B.
   What is meant by the median is an arithmetic operation of calculating a medium value of elements. What is meant by a median of vectors is a vector having components each of which is a medium value of corresponding components of the vectors.
   In a first spatial prediction vector candidate #311 (PMVx, PMVy), (i) PMVx is calculated by a median (MVax, MVbx, MVcx) and (ii) PMVy is calculated by a median (MVay, MVby, MVcy), where MVax and MVay represent the motion vector assigned to the partition A, MVbx and MVby represent the motion vector assigned to the partition B, and MVcx and MVcy represent the motion vector assigned to the partition C. Note that "median (···)" means a medium value of parenthetical elements.
   The second spatial prediction vector calculating section 312 sets, as a second spatial prediction vector candidate #312, a motion vector assigned to a partition adjacent to a left side of a target partition. That is, the second spatial prediction vector calculating section 312 sets, as the second spatial prediction vector candidate #312, the motion vector MVa assigned to the partition A illustrated in (a) of Fig. 3.
   The temporal prediction vector calculating section 313 sets, as a temporal prediction vector candidate #313, a motion vector assigned to a partition identical in location to a target partition (hereinafter, referred to as a "collocate partition") of a frame that has been encoded before a frame containing the target partition is encoded.
(b) of Fig. 3 is a view illustrating a target partition, a prediction vector to be assigned to the target partition, a collocation partition, and a motion vector assigned to the collocate partition.

The prediction vector candidate selecting section 314 internally estimates a predictive accuracy of a temporal prediction vector candidate. The prediction vector candidate selecting section 314 then selects, in accordance with the predictive accuracy, a motion vector candidate to be used as a secondary prediction vector candidate #314 from a spatial prediction vector candidate and the temporal prediction vector candidate. In the present embodiment, the prediction vector candidate selecting section 314 selects one of the second spatial prediction vector candidate #312 and the temporal prediction vector candidate #313, and then sets a selected prediction vector candidate as the secondary prediction vector candidate #314.

In the present embodiment, the prediction vector candidate selecting section 314 selects, in accordance with a size of a target partition, one of the second spatial prediction vector candidate #312 and the temporal prediction vector candidate #313, and then sets a selected prediction vector candidate as the secondary prediction vector candidate #314.

More specifically, the prediction vector candidate selecting section 314 selects the temporal prediction vector candidate #313 in a case where the size of the target partition is not smaller than a predetermined reference size. In contrast, the prediction vector candidate selecting section 314 selects the second spatial prediction vector candidate #312 in a case where the size of the target partition is smaller than the predetermined reference size.

The index of the size of the target partition can be the number of pixels included in the target partition or a sum of lengths of two adjacent sides of the target partition. Alternatively, the index of the size of the target partition can be a length of one (for example, a length of longer side) of two adjacent sides of the target partition. The index of the size of the target partition can also be other indices than the above-described indices.

Generally, an image represented by the target partition and an image represented by the collocate partition are closely correlated with each other, in a case where the size of the target partition is large. Therefore, a motion vector assigned to the collocate partition and a motion vector to be assigned to the target partition are closely correlated with each other. That is, the motion vector assigned to the collocate partition is similar to the motion vector to be assigned to the target partition, in the case where the size of the target partition is large. To put it another way, a predictive accuracy of the motion vector assigned to the collocate partition is high, in the case where the size of the target partition is large.

In contrast, the image represented by the target partition and the image represented by the collocate partition are poorly correlated with each other, in a case where the size of the target partition is. Therefore, the motion vector assigned to the collocate partition is dissimilar to the motion vector to be assigned to the target partition. To put it another way, the predictive accuracy of the motion vector assigned to the collocate partition is low, in the case where the size of the target partition is small.

The prediction vector candidate selecting section 314 thus selects the temporal prediction vector candidate #313 in the case where the size of the target partition is not smaller than the predetermined reference size, whereas the prediction vector candidate selecting section 314 selects the second spatial prediction vector candidate #312 in the case where the size of the target partition is smaller than the predetermined reference size. This makes it possible to select a prediction vector candidate more similar to the motion vector to be assigned to the target partition. It is therefore possible to improve an encoding efficiency.

The temporal prediction vector calculating section 313 can set, as the temporal prediction vector candidate #313, a median of (i) the motion vector assigned to the collocate partition and (ii) motion vectors assigned to respective partitions surrounding the collocate partition. More specifically, the temporal prediction vector calculating section 313 can set, as the temporal prediction vector candidate #313, a median of (a) the motion vector assigned to the collocate partition and (b) motion vectors assigned to respective partitions adjacent to the collocate partition. Alternatively, the temporal prediction vector calculating section 313 can set, as the temporal prediction vector candidate #313, a median of (I) the motion vector assigned to the collocate partition, (II) the motion vectors assigned to the respective partitions adjacent to the collocate partition and (III) motion vectors assigned to respective partitions that share an apex with the collocate partition.

The description was given on the premise that the prediction vector candidate creating section 31 is configured to calculate the first spatial prediction vector candidate #311 and the secondary prediction vector candidate #314. The present embodiment is not limited to this. Therefore, the prediction vector candidate creating section 31 can be configured to calculate other motion vector candidates including the secondary prediction vector candidate #314. For example, the prediction vector candidate creating section 31 can calculate, as a motion vector candidate, a global motion vector to be assigned to each frame.

It is preferable that an encoding device be configured to switch information indicative of whether to use the secondary prediction vector candidate #314. The information is encoded and is then embedded in encoded data. This is because calculation of the secondary prediction vector candidate #314 can increase a calculation load on the encoding device. Encoded information can be embedded in a sequence header, a frame header, a slice header, or a macro block header of the encoded data. In a case of encoded data H.264/AVC for controlling (i) a structure of encoded data of a sequence and (ii) a structure of encoded data of a picture, encoding can be carried out with the use of a sequence parameter set and a picture parameter set, respectively.

### (Operation example 1 of the motion vector redundancy reducing section 19)

The following description will discuss an example 1 of how the motion vector redundancy reducing section 19 operates, with reference to Fig. 4. Fig. 4 is a flowchart showing the example 1 of how the motion vector redundancy reducing section 19 operates.

The first spatial prediction vector calculating section 311, the second spatial prediction vector calculating section 312, and the temporal prediction vector calculating section 313 calculate a first spatial prediction vector candidate #311, a second spatial prediction vector candidate #312, and a temporal prediction vector candidate #313, respectively (S1).

The prediction vector candidate selecting section 314 sets the second spatial prediction vector candidate #312 as a secondary prediction vector candidate #314, in a case where a target partition has a size smaller than a reference size. In contrast, the prediction vector candidate selecting section 314 sets the temporal prediction vector candidate #313 as the secondary prediction vector candidate #314, in a case where the target partition has a size not smaller than the reference size (S2).

The prediction vector selecting section 32 calculates an encoding cost for each of the first spatial prediction vector candidate #311 and the secondary prediction vector candidate #314 (S3).

The prediction vector selecting section 32 sets, as a prediction vector #32a, the first spatial prediction vector candidate #311 or the secondary prediction vector candidate #314, whichever is lower in encoding cost (S4).

The PMV flag creating section 33 creates a flag #19b indicative of which one of the first spatial prediction vector candidate #311 and the secondary prediction vector candidate #314 has been set as the prediction vector #32a (S5). Note that the flag #19b can be a flag indicative of which one of the first spatial prediction vector candidate #311, the second spatial prediction vector candidate #312, and the secondary prediction vector candidate #314 has been set as the prediction vector #32a.

The subtracter 34 creates a difference motion vector #19a that is a difference vector between the prediction vector #32a and a motion vector #17 assigned to the target partition (S6).

The motion vector redundancy reducing section 19 conducts S11 through S 19 for each target partition.

The motion vector redundancy reducing section 19 thus selects one of a second spatial prediction vector candidate and a temporal prediction vector candidate, based on a size of a target partition. This makes it possible to select the second spatial prediction vector candidate or the temporal prediction vector candidate, whichever is more similar to a motion vector to be assigned to the target partition.

Generally, an encoding efficiency can be improved by use of a prediction vector candidate which is more similar to the motion vector to be assigned to the target partition.

Actually, the motion vector redundancy reducing section 19 sets, as a secondary prediction vector candidate, such a selected prediction vector candidate.

In addition, the motion vector redundancy reducing section 19 sets, as the prediction vector to be assigned to the target partition, the secondary prediction vector candidate or a first spatial prediction vector candidate, whichever is lower in encoding cost.

Generally, an encoding efficiency can be improved by use of a prediction vector whose encoding cost is lower.

Therefore, the motion vector redundancy reducing section 19 can set, as the motion vector to be assigned to the target partition, the first spatial prediction vector candidate, the second spatial prediction vector candidate, or the temporal prediction vector candidate, whichever is higher in encoding efficiency.

Hence, an excellent encoding efficiency can be attained by use of the motion vector redundancy reducing section 19.

The prediction vector candidate selecting section 314 selects, as the secondary prediction vector candidate, one of the second spatial prediction vector candidate and the temporal prediction vector candidate in accordance with the size of the target partition. Therefore, it is not necessary to provide a flag indicative of which one of the second spatial prediction vector candidate and the temporal prediction vector candidate has been selected as the secondary prediction vector candidate.

That is, a decoding device for decoding an image on the basis of the encoded data #2 created by the video encoding device 1 can select one of a second spatial prediction vector candidate and a temporal prediction vector candidate as a secondary prediction vector candidate in accordance with a size of a target partition, as with the motion vector redundancy reducing section 19. Therefore, the decoding device can reproduce, without referring to a flag, which one of the second spatial prediction vector candidate and the temporal prediction vector candidate has been selected as the secondary prediction vector candidate.

The motion vector redundancy reducing section 19 thus can (i) improve the encoding efficiency by use of the prediction vector whose encoding cost is lower and (ii) reduce encoding quantity of the flag indicative of which one of the second spatial prediction vector candidate and the temporal prediction vector candidate has been selected as the secondary prediction vector candidate. This allows a further improvement in the encoding efficiency.

### (Operation example 2 of the motion vector redundancy reducing section 19)

The operation of the motion vector redundancy reducing section 19 of the present embodiment is not limited to the example 1. The following description will discuss an example 2 of how the motion vector redundancy reducing section 19 operates with reference to Fig. 5. Fig. 5 is a flowchart showing an example 2 of how the motion vector redundancy reducing section 19 operates.

The first spatial prediction vector calculating section 311 first calculates a first spatial prediction vector candidate #311 (S11).

The motion vector redundancy reducing section 19 determines whether or not a skip mode is applied to a target partition (S12).

The prediction vector candidate selecting section 314 determines whether or not the target partition has a size not smaller than a predetermined reference size (S 13), in a case where the motion vector redundancy reducing section 19 determines that the skip mode is not applied to the target partition (NO in S12).

The prediction vector candidate selecting section 314 controls the temporal prediction vector calculating section 313 to calculate a temporal prediction vector candidate #313, and sets the temporal prediction vector candidate #313 as a secondary prediction vector candidate #314 (S14), in a case where the prediction vector candidate selecting section 314 determines that the target partition has a size not smaller than the predetermined reference size (YES in S 13).

In contrast, the prediction vector candidate selecting section 314 controls the second spatial prediction vector calculating section 312 to calculate a second spatial prediction vector candidate #312, and sets the second spatial prediction vector candidate #312 as a secondary prediction vector candidate #314 (S15), in a case where the prediction vector candidate selecting section 314 determines that the target partition has a size smaller than the predetermined reference size (NO in S 13) or in a case where the motion vector redundancy reducing section 19 determines that the skip mode is applied to the target partition (YES in S12).

The prediction vector selecting section 32 calculates an encoding cost for each of the first spatial prediction vector candidate #311 and the secondary prediction vector candidate #314 (S16).

The prediction vector selecting section 32 sets, as a prediction vector #32a, the first spatial prediction vector candidate #311 or the secondary prediction vector candidate #314, whichever is lower in encoding cost (S17).

The PMV flag creating section 33 creates a flag #19b indicative of which one of the first spatial prediction vector candidate #311 and the secondary prediction vector candidate #314 has been set as the prediction vector #32a (S18). Note that the flag #19b can be a flag indicative of which one of the first spatial prediction vector candidate #311, the second spatial prediction vector candidate #312, and the secondary prediction vector candidate #314 has been set as the prediction vector #32a.

The subtracter 34 creates a difference motion vector #19a that is a difference vector between the prediction vector #32a and a motion vector #17 assigned to the target partition (S19).

The motion vector redundancy reducing section 19 carries out S11 through S 19 for each target partition.

The motion vector redundancy reducing section 19 thus calculates the temporal prediction vector candidate #313, and then sets the temporal prediction vector candidate #313 as the secondary prediction vector candidate #314, in the case where the target partition has the size not smaller than the predetermined reference size. In contrast, the motion vector redundancy reducing section 19 calculates the second spatial prediction vector candidate #312, and then sets the second spatial prediction vector candidate #312 as the secondary prediction vector candidate #314, in the case where the target partition has the size smaller than the predetermined reference size.

In other words, the motion vector redundancy reducing section 19 does not calculate (i) the second spatial prediction vector candidate #312 in the case where the target partition has the size not smaller than the predetermined reference size and (ii) the temporal prediction vector candidate #313 in the case where the target partition has the size smaller than the predetermined reference size.

Furthermore, the motion vector redundancy reducing section 19 sets the second spatial prediction vector candidate #312 as the secondary prediction vector candidate #314 without determining whether or not the target partition has a size not smaller than the predetermined reference size, in the case where the motion vector redundancy reducing section 19 determines that the skip mode is applied to the target partition.

The motion vector redundancy reducing section 19 which carries out such operations can (i) calculate a prediction vector with high encoding efficiency and (ii) minimize a calculation cost for calculating such a prediction vector. Therefore, the motion vector redundancy reducing section 19 can (i) calculate the prediction vector with high encoding efficiency (ii) calculate such a prediction vector at a high speed.

### (Video decoding device 2)

The following description will discuss a video decoding device 2 of the present invention with reference to Figs. 6 through 9. Fig. 6 is a block diagram showing a configuration of the video decoding device 2 of the present embodiment.

As shown in Fig. 6, the video decoding device 2 includes a variable-length code decoding section 23, a motion vector restoring section 24, a buffer memory 25, a prediction image creating section 26, an intra prediction image creating section 27, a prediction method determining section 28, an inverse quantization/inverse conversion section 29, and an adder 30.

The video decoding device 2 receives the encoded data #2, and sequentially outputs an output image #3.

The variable-length code decoding section 23 carries out a variable-length decoding with respect to the encoded data #2 so as to output a difference motion vector #23a, a prediction mode #23b, quantized prediction residual data #23c, and a PMV flag 23d.

The motion vector restoring section 24 decodes the difference motion vector #23a, the PMV flag 23d, and a motion vector #25a that has been decoded and stored in the buffer memory 25 so as to obtain a motion vector #24 of a target macro block. The motion vector restoring section 24 will be later described in detail. Therefore, the motion vector restoring section 24 is not described here.

The buffer memory 25 stores the decoded image #3 (described later), the motion vector #24, and the prediction mode #23b.

The prediction image creating section 26 creates an inter prediction image #26 based on the motion vector #25a and the decoded image #3 that are stored in the buffer memory 25.

The intra prediction image creating section 27 creates an intra prediction image #27 based on a locally decoded image #25b of an image containing a target macro block, which locally decoded image #25b has been stored in the buffer memory 25.

The prediction method determining section 28 selects the intra prediction image #27 or the inter prediction image #26 in accordance with the prediction mode #23b so as to output a selected prediction image as a prediction image #28.

The inverse quantization/inverse conversion section 29 carries out an inverse quantization and an inverse DCT conversion with respect to the quantized prediction residual data #23c so as to output a prediction residual #29.

The adder 30 adds the quantized prediction residual data #23c and the prediction image #28 so as to output the decoded image #3. The decoded image #3 is stored in the buffer memory 25.

### (Motion vector restoring section 24)

The following description will discuss a configuration of the motion vector restoring section 24 with reference to Fig. 7. Fig. 7 is a block diagram showing the configuration of the motion vector restoring section 24.

As shown in Fig. 7, the motion vector restoring section 24 includes a prediction vector candidate creating section 31, a prediction vector determining section 35, and an adder 36. Upon receipt of the motion vector #25a stored in the buffer memory 25, the prediction vector candidate creating section 31 outputs a first spatial prediction vector candidate #311 and a secondary prediction vector candidate #314, one of which is to be assigned to a target partition. The configuration and operation of the prediction vector candidate creating section 31 have been already described. Therefore, the prediction vector candidate creating section 31 is not described here.

The prediction vector determining section 35 selects, as a prediction vector #35 to be assigned to the target partition, one of the first spatial prediction vector candidate #311 and the secondary prediction vector candidate #314 in accordance with the PMV flag #23d supplied from the variable-length code decoding section 23. The prediction vector #35 is supplied to the adder 36.

The PMV flag #23d is the same as the PMV flag #19b created in the video encoding device 1.

According to the above description, the video decoding device 2 is configured such that the variable-length code decoding section 23 decodes the PMV flag #23d, for the purpose of clarifying how the video decoding device 2 is correlated with the video encoding device 1. The present embodiment is not limited to this. Alternatively, the video decoding device 2 can be configured such that the variable-length code decoding section 23 directly decodes selection information (corresponding to #32b in the video encoding device), which is information indicative of which prediction vector candidate has been selected.

The PMV flag #23d is a flag indicative of a prediction vector candidate with higher encoding efficiency. Therefore, the prediction vector #35 selected by the prediction vector determining section 35 is the same as the prediction vector #32a selected by the prediction vector selecting section 32 of the video encoding device 1.

The adder 36 adds the difference motion vector #23a supplied from the variable-length code decoding section 23 and the prediction vector #35 supplied from the prediction vector determining section 35 so as to restore the motion vector #24.

### (Operation example of the motion vector restoring section 24)

The following description will discuss an example of how the motion vector restoring section 24 operates, with reference to Fig. 8. Fig. 8 is a flowchart showing the operation of the motion vector restoring section 24.

The motion vector restoring section 24 first analyzes information indicative of whether or not a skip mode is applied, which information has been embedded in block mode information of encoded data #2 (S21).

A first spatial prediction vector calculating section 311 calculates a first spatial prediction vector candidate #311 (S22).

The motion vector restoring section 24 determines whether or not the skip mode is applied to a target partition (S23).

The prediction vector candidate selecting section 314 determines whether or not the target partition has a size not smaller than a predetermined reference size (S24), in a case where the motion vector restoring section 24 determines that the skip mode is not applied to the target partition (NO in S23).

The prediction vector candidate selecting section 314 controls the temporal prediction vector calculating section 313 to calculate a temporal prediction vector candidate #313, and then sets the temporal prediction vector candidate #313 as a secondary prediction vector candidate #314 (S26), in a case where the prediction vector candidate selecting section 314 determines that the target partition has the size not smaller than the predetermined reference size (YES in S24).

The prediction vector candidate selecting section 314 controls a second spatial prediction vector calculating section 312 to calculate a second spatial prediction vector candidate #312, and then sets the second spatial prediction vector candidate #312 as a secondary prediction vector candidate #314 (S25), in a case where the prediction vector candidate selecting section 314 determines that the target partition has a size smaller than the predetermined reference size (NO in S24) or in a case where the motion vector restoring section 24 determines that the skip mode is applied to the target partition (YES in S23).

The prediction vector determining section 35 (i) analyzes a PMV flag #23d (S27), (ii) selects one of the first spatial prediction vector candidate #311 and the secondary prediction vector candidate #314, which one is indicated by the PMV flag #23d, and (iii) sets a selected one as a prediction vector #35 (S28). The prediction vector #35 is supplied to the adder 36.

The adder 36 adds (i) the prediction vector #35 supplied from the prediction vector determining section 35 and (ii) a difference motion vector #23a supplied from the variable-length code decoding section 23 so as to create a motion vector #24 (S29).

The motion vector restoring section 24 carries out S21 through S29 for each target partition.

The prediction vector #35 can be thus created by use of the motion vector restoring section 24. The prediction vector #35 is the same as the prediction vector #32a used in an encoding process conducted by the video encoding device 1. Therefore, the motion vector #24 created by the motion vector restoring section 24 is the same as the motion vector #17 created in the video decoding device 1.

The motion vector restoring section 24 can thus restore the motion vector #24 that is the same as the motion vector #17 created in the video encoding device 1.

Therefore, the video decoding device 2 including the motion vector restoring section 24 can create the output image #3 on the basis of the encoded data #2 with high encoding efficiency.

The prediction vector candidate selecting section 314 selects, as the secondary prediction vector candidate, one of the second spatial prediction vector candidate and the temporal prediction vector candidate in accordance with the size of the target partition. It is therefore possible to restore a secondary prediction vector without referring to a flag indicative of which one of the second spatial prediction vector candidate and the temporal prediction vector candidate has been selected as the secondary prediction vector candidate.

That is, the video decoding device 2 for decoding an image on the basis of the encoded data #2 created by the video encoding device 1 can select one of the second spatial prediction vector candidate and the temporal prediction vector candidate as the secondary prediction vector candidate in accordance with the size of the target partition. Therefore, the video decoding device 2 can reproduce, without referring to a flag, which one of the second spatial prediction vector candidate and the temporal prediction vector candidate has been selected as the secondary prediction vector candidate.

It is therefore possible to reduce encoding quantity of the flag indicative of which one of the second spatial prediction vector candidate and the temporal prediction vector candidate has been selected as the secondary prediction vector candidate. This allows a further improvement in the encoding efficiency.

### (Data structure of encoded data #2)

The following description will discuss data structure of encoded data #2 of the present embodiment with reference to Fig. 9.

Fig. 9 is a view illustrating a bit stream #MB of each macro block of encoded data #2. As shown in Fig. 9, the bit stream #MB contains block mode information Mod, index information Idxi, a flag #19b, and motion vector information MVi (i = 1 through N). Note that N represents the number of partitions of which a macro block is made up. Note also that the flag #19b is contained in the bit stream #MB, only in a case where the flag #19b is required for selecting a prediction vector of each partition.

The block mode information Mod contains information such as (i) a prediction mode #18b of the macro block, (ii) partition division information, and (iii) information indicative of whether or not a skip mode is applied to each partition.

The index information Idxi contains a reference picture number to which each partition refers. The reference picture number is required for a motion compensation.

The motion vector information MVi contains a difference motion vector #19a for each partition.

As early described, the video decoding device 2 can restore the prediction vector #24 that is the same as the prediction vector # 19a, by use of the encoded data #2 made up of the bit stream #MB. The video decoding device 2 can create the output image #3 by use of the prediction vector #24.

That is, such a structure of the bit stream #MB makes it possible to obtain encoded data #2 which is (i) encodable by the video decoding device 2 and (ii) high in encoding efficiency.

### [Modified Example 1]

The present invention is not limited to the embodiment. The following description will discuss a video encoding device of Modified Example 1 of the present invention with reference to Fig. 10.

Fig. 10 is a block diagram showing a configuration of a motion vector redundancy reducing section 19 of the video decoding device in accordance with Modified Example 1 of the present invention. The configuration of the video encoding device of Modified Example 1 of the present invention other than the configuration of the motion vector redundancy reducing section 19 is identical to the configuration of the video encoding device 1 of the embodiment.

As shown in Fig. 10, a prediction vector candidate creating section 31 of Modified Example 1 employs a prediction vector candidate selecting section 315 instead of the prediction vector candidate selecting section 314.

The prediction vector candidate selecting section 315 selects one of a second spatial prediction vector candidate #312 and a temporal prediction vector candidate #313 in accordance with a length of a motion vector assigned to a target partition, and sets a selected prediction vector candidate as a secondary prediction vector candidate #315.

More specifically, the prediction vector candidate selecting section 315 selects the temporal prediction vector candidate #313, in a case where the length of the motion vector assigned to the target partition is not greater than a predetermined reference value. In contrast, the prediction vector candidate selecting section 315 selects the second spatial prediction vector candidate #312, in a case where the length of the motion vector assigned to the target partition is greater than the predetermined reference value.

As shown in Fig. 10, the prediction vector candidate selecting section 315 supplies the secondary prediction vector candidate #315 to a prediction vector selecting section 32. The prediction vector selecting section 32 (i) selects a first spatial prediction vector candidate #311 or the secondary prediction vector candidate #315, whichever is higher in encoding efficiency and (ii) sets a selected prediction vector candidate as a prediction vector #32a.

Generally, an image represented by a target partition greatly moves, in a case where a length of a motion vector assigned to the target partition is long. In this case, the image represented by the target partition is poorly correlated with an image represented by a collocate partition.

That is, a motion vector assigned to a collocate partition is dissimilar to a motion vector to be assigned to the target partition, in the case where the length of the motion vector assigned to the target partition is long. In other words, a predictive accuracy of the motion vector assigned to the collocate partition is low, in the case where the length of the motion vector assigned to the target partition is long.

In contrast, (i) the image represented by the collocate partition is closely correlated with the image represented by the target partition and (ii) the motion vector assigned to the collocate partition is similar to the motion vector to be assigned to the target partition, in a case where the length of the motion vector assigned to the target partition is short. In other words, the predictive accuracy of the motion vector assigned to the collocate partition is high, in the case where the length of the motion vector assigned to the target partition is short.

The prediction vector candidate selecting section 315 thus selects the temporal prediction vector candidate #313, in the case where the length of the motion vector assigned to the target partition is not greater than a predetermined reference value. In contrast, the prediction vector candidate selecting section 315 selects the second spatial prediction vector candidate #312, in a case where the length of the motion vector assigned to the target partition is greater than the predetermined reference value. This allows improvement in the encoding efficiency.

Note that the motion vector redundancy reducing section 19 of Modified Example 1 carries out an operation substantially similar to that of the motion vector redundancy reducing section 19 of the embodiment, except the above-described point.

### [Modified Example 1']

The following description will discuss a video encoding device of Modified Example 1' in accordance with the present invention. The video encoding device of Modified Example 1' of the present invention employs a prediction vector candidate selecting section 315' instead of the prediction vector candidate selecting section 314 of the video encoding device 1. The configuration of the video encoding device of Modified Example 1' of the present invention other than the configuration of the prediction vector candidate selecting section 315' is identical to the configuration of the video encoding device 1 of the embodiment.

The prediction vector candidate selecting section 315' (i) selects one of a second spatial prediction vector candidate #312 and a temporal prediction vector candidate #313 in accordance with a length of a spatial prediction vector assigned to a target partition, and (ii) sets a selected prediction vector candidate to a secondary prediction vector candidate #315.

More specifically, the prediction vector candidate selecting section 315' selects the temporal prediction vector candidate #313, in a case where the length of the spatial prediction vector assigned to the target partition is not greater than a predetermined distance. In contrast, the prediction vector candidate selecting section 315' selects the second spatial prediction vector candidate #312, in a case where the length of the spatial prediction vector assigned to the target partition is greater than the predetermined distance.

Generally, an image represented by a target partition greatly moves, in a case where a length of a spatial prediction vector assigned to the target partition is long. In this case, the image represented by the target partition is poorly correlated with an image represented by a collocate partition.

That is, a motion vector assigned to a collocate partition is dissimilar to a motion vector to be assigned to the target partition, in the case where the length of the spatial prediction vector assigned to the target partition is long. In other words, a predictive accuracy of the motion vector assigned to the collocate partition is low, in the case where the length of the spatial prediction vector assigned to the target partition is long.

In contrast, (i) the image represented by the collocate partition is closely correlated with the image represented by the target partition and (ii) the motion vector assigned to the collocate partition is similar to the motion vector to be assigned to the target partition, in a case where the length of the spatial prediction vector assigned to the target partition is short. In other words, the predictive accuracy of the motion vector assigned to the collocate partition is high, in the case where the length of the spatial prediction vector assigned to the target partition is short.

The prediction vector candidate selecting section 315' thus selects the temporal prediction vector candidate #313, in the case where the length of the spatial prediction vector assigned to the target partition is not greater than a predetermined distance. In contrast, the prediction vector candidate selecting section 315' selects the second spatial prediction vector candidate #312, in the case where the length of the spatial prediction vector assigned to the target partition is greater than the predetermined distance. This allows improvement in the encoding efficiency.

Note that a motion vector redundancy reducing section 19 of Modified Example 1' carries out an operation substantially similar to that of the motion vector redundancy reducing section 19 of the embodiment, except the above-described point.

The prediction vector candidate selecting section 315' can be configured to (i) select one of the second spatial prediction vector candidate #312 and the temporal prediction vector candidate #313 in accordance with a length of the temporal prediction vector candidate #313, instead of in accordance with the length of the spatial prediction vector assigned to the target partition and (ii) set a selected prediction vector candidate as the secondary prediction vector candidate #315.

### [Modified Example 2]

The following description will discuss a video encoding device of Modified Example 2 in accordance with the present invention. The video encoding device of Modified Example 2 of the present invention employs a prediction vector candidate selecting section 316, instead of the prediction vector candidate selecting section 314 of the video encoding device 1. The configuration of the video encoding device of Modified Example 2 of the present invention other than the configuration of the prediction vector candidate selecting section 316 is identical to the configuration of the video encoding device 1 of the embodiment.

The prediction vector candidate selecting section 316 (i) selects one of a second spatial prediction vector candidate #312 and a temporal prediction vector candidate #313 in accordance with a frame distance between a frame containing a target partition and a frame containing a collocate partition and (ii) sets a selected prediction vector candidate as a secondary prediction vector candidate #316.

More specifically, the prediction vector candidate selecting section 316 selects the temporal prediction vector candidate #313, in a case where the frame distance between the frame containing the target partition and the frame containing the collocate partition is not greater than a predetermined reference distance. In contrast, the prediction vector candidate selecting section 316 selects the second spatial prediction vector candidate #312, in a case where the frame distance between the frame containing the target partition and the frame containing the collocate partition is greater than the predetermined reference distance.

Note that a frame distance can be detected by referring to reference image relative positions assigned to the respective frames. (a) of Fig. 11 is a view illustrating reference image relative positions assigned to respective frames that had been encoded before a target frame was encoded. As illustrated in (a) of Fig. 11, the greater an index indicative of a reference image relative position of a frame becomes, the greater a frame distance between the target frame and respective frames becomes.

The frame distance can be represented by a difference between (i) an image number assigned to the frame containing the target partition and (ii) an image number assigned to the frame containing the collocate partition, in a case where image numbers, corresponding to respective temporal positions of the frames, are assigned to the respective frames. (b) of Fig. 11 is a view illustrating image numbers assigned to respective of a target frame and frames in the vicinity of the target frame.

Generally, an image represented by a target partition is poorly correlated with an image represented by a collocate partition, in a case where a frame distance between a frame containing the target partition and a frame containing the collocate partition is great.

That is, a motion vector assigned to the collocate partition is dissimilar to a motion vector to be assigned to the target partition in the case where the frame distance between the frame containing the target partition and the frame containing the collocate partition is great. In other words, a predictive accuracy of the motion vector assigned to the collocate partition is low, in the case where the frame distance between the frame containing the target partition and the frame containing the collocate partition is great.

In contrast, the image represented by the target partition is closely correlated with the image represented by the collocate partition, in the case where the frame distance between the frame containing the target partition and the frame containing the collocate partition is short.

That is, the motion vector assigned to the collocate partition is similar to the motion vector to be assigned to the target partition, in the case where the frame distance between the frame containing the target partition and the frame containing the collocate partition is short. In other words, the predictive accuracy of the motion vector assigned to the collocate partition is high, in the case where the frame distance between the frame containing the target partition and the frame containing the collocate partition is short.

The prediction vector candidate selecting section 316 thus selects the temporal prediction vector candidate #313, in the case where the frame distance between the frame containing the target partition and the frame containing the collocate partition is not greater than the predetermined reference distance. In contrast, the prediction vector candidate selecting section 316 selects the second spatial prediction vector candidate #312, in the case where the frame distance between the frame containing the target partition and the frame containing the collocate partition is greater than the predetermined reference distance. It is therefore possible to select a secondary prediction vector candidate with higher encoding efficiency.

Note that a motion vector redundancy reducing section 19 of Modified Example 2 carries out an operation substantially similar to that of the motion vector redundancy reducing section 19 of the embodiment, except the above-described point.

A video decoding device of Modified Example 2 in accordance with the present invention employs the prediction vector candidate selecting section 316, instead of the prediction vector candidate selecting section 314 of the video decoding device 2 of Embodiment 1. That is, the video decoding device of Modified Example 2 of the present invention selects a temporal prediction vector candidate #313, in a case where a frame distance between a frame containing a target partition and a frame containing a collocate partition is not greater than a predetermined reference distance. In contrast, the video decoding device of Modified Example 2 in accordance with the present invention selects a second spatial prediction vector candidate #312, in a case where the frame distance between the frame containing the target partition and the frame containing the collocate partition is greater than the predetermined reference distance.

### [Modified Example 3]

The following description will discuss a video encoding device of Modified Example 3 of the present invention. The video encoding device of Modified Example 3 employs a prediction vector candidate selecting section 317, instead of the prediction vector candidate selecting section 314 of the video encoding device 1. The configuration of the video encoding device of Modified Example 3 of the present invention other than the configuration of the prediction vector candidate selecting section 317 is identical to the configuration of the video encoding device 1 of the embodiment.

The prediction vector candidate selecting section 317 selects a second spatial prediction vector candidate #312, in a case where at least one of a frame containing a target partition and a frame containing a collocate partition belongs to a GOP (Group of Picture) structure (a picture group structure) made up of pictures including B pictures. In contrast, the prediction vector candidate selecting section 317 selects a temporal prediction vector candidate #313, in a case where neither the frame containing the target partition nor the frame containing the collocate partition belongs to the GOP structure.

That is, the prediction vector candidate selecting section 317 (i) selects one of the second spatial prediction vector candidate #312 and the temporal prediction vector candidate #313 in accordance with whether or not at least one of the frame containing the target partition and the frame containing the collocate partition is encoded while employing the GOP structure and then (ii) sets a selected prediction vector candidate as a secondary prediction vector candidate #317.

Fig. 12 is a view showing a GOP structure including B pictures, in particular, a GOP structure including layered B pictures. As shown in Fig. 12, the GOP structure includes I pictures (Intra pictures), P pictures (Predictive pictures), and B pictures (Bi-directional predictive pictures).

As shown in Fig. 12, a frame distance between respective frames tends to be long in the GOP structure. Therefore, the temporal prediction vector candidate #313 is likely to be dissimilar to a motion vector to be assigned to the target partition, in the case where at least one of the frame containing the target partition and the frame containing the collocate partition belongs to the GOP structure. That is, a predictive accuracy of the temporal prediction vector candidate #313 is low, in the case where at least one of the frame containing the target partition and the frame containing the collocate partition belongs to the GOP structure.

The video encoding device of Modified Example 3 including the prediction vector candidate selecting section 317 selects the second spatial prediction vector candidate #312, in the case where at least one of the frame containing the target partition and the frame containing the collocate partition belongs to the GOP structure. In contrast, the video encoding device of Modified Example 3 including the prediction vector candidate selecting section 317 selects the temporal prediction vector candidate #313, in the case where neither the frame containing the target partition nor the frame containing the collocate partition belongs to the GOP structure. It is therefore possible to select a secondary prediction vector candidate with higher encoding efficiency.

Note that a motion vector redundancy reducing section 19 of Modified Example 3 carries out an operation substantially similar to that of the motion vector redundancy reducing section 19 of the embodiment, except the above-described point.

It is preferable that the video encoding device of Modified Example 3 (i) create a flag #BC indicative of whether or not at least one of the frame containing the target partition and the frame containing the collocate partition has been encoded while employing the GOP structure and (ii) transmit the flag #BC to a decoding device.

A video decoding device of Modified Example 3 also employs the prediction vector candidate selecting section 317, instead of the prediction vector candidate selecting section 314 of the video decoding device 2. That is, the video decoding device of Modified Example 3 also selects a second spatial prediction vector candidate #312, in a case where at least one of a frame containing a target partition and a frame containing a collocate partition belongs to a GOP structure. In contrast, the video decoding device of Modified Example 3 also selects a temporal prediction vector candidate #313, in a case where neither the frame containing the target partition nor the frame containing the collocate partition belongs to the GOP structure. It is therefore possible to select a secondary prediction vector candidate with high encoding efficiency. Note that the video decoding device of Modified Example 3 can determine, by referring to the flag #BC, whether or not the frame containing the target partition and/or the frame containing the collocate partition employ(s) the GOP structure.

Hence, encoded data with high encoding efficiency can be decoded by use of the video decoding device of Modified Example 3.

### [Modified Example 3']

The following description will discuss a video encoding device of Modified Example 3' of the present invention. The video encoding device of Modified Example 3' employs a prediction vector candidate selecting section 317', instead of the prediction vector candidate selecting section 314 of the video encoding device 1. The configuration of the video encoding device of Modified Example 3' of the present invention other than the configuration of the prediction vector candidate selecting section 317' is similar to the configuration of the video encoding device 1 of the embodiment. The following description will discuss the video encoding device of Modified Example 3'.

The prediction vector candidate selecting section 317' selects a second spatial prediction vector candidate #312, in a case where a frame containing a target partition is a B picture. In contrast, the prediction vector candidate selecting section 317' selects a temporal prediction vector candidate #313, in a case where the frame containing the target partition is not the B picture.

As has been described in Modified Example 3, the frame distance between the respective frames tends to become long, in the case of the GOP structure including B frames. According to Modified Example 3', such a tendency can be employed, instead of encoding of the flag #BC indicative of whether or not at least one of the frame containing the target partition and the frame containing the collocate partition is encoded while employing the GOP structure.

Thus, (i) a predictive accuracy of the temporal prediction motion vector candidate #313 is determined and (ii) a selection is changed so that one of the temporal prediction vector candidate #313 and the second spatial prediction vector candidate #312 is selected as a secondary prediction vector candidate #314, in accordance with a type of a frame. It is therefore possible to use a motion vector candidate that is more likely to be similar to a motion vector of a target partition.

A video decoding device of Modified Example 3' is identical to the video decoding device 2 of the embodiment except that the video decoding device of Modified Example 3' employs the prediction vector candidate selecting section 317' instead of the prediction vector candidate selecting section 314.

Hence, encoded data with high encoding efficiency can be encoded by use of the video decoding device of Modified Example 3'.

### [Modified Example 3"]

The following description will discuss a video encoding device of Modified Example 3". The video encoding device of Modified Example 3" includes a prediction vector candidate selecting section 317", instead of the prediction vector candidate selecting section 314 of the video encoding device 1. The configuration of the video encoding device of Modified Example 3" other than the configuration of the prediction vector candidate selecting section 317" is similar to the configuration of the video encoding device 1 of the embodiment. The following description will discuss the video encoding device of Modified Example 3".

The prediction vector candidate selecting section 317" selects a second spatial prediction vector candidate #312, in a case where (i) a frame containing a target partition is a B picture and (ii) a size of the target partition is not smaller than a predetermined reference size. In contrast, the prediction vector candidate selecting section 317" selects a temporal prediction vector candidate #313 in cases other than the above case.

Alternatively, the prediction vector candidate selecting section 317" can be configured to (i) select a second spatial prediction vector candidate #312, in a case where (a) a frame containing a target partition is a B picture or (b) a size of the target partition is not smaller than a predetermined reference size, whereas (ii) select a temporal prediction vector candidate #313 in cases other than the above case.

Thus, (i) a predictive accuracy of the temporal prediction motion vector candidate #313 is determined and (ii) a selection is changed so that one of the temporal prediction vector candidate #313 and the second spatial prediction vector candidate #312 is selected as a secondary prediction vector candidate #314, in accordance with a type of a frame and a size of the target partition. It is therefore possible to use a motion vector candidate that is more likely to be similar to a motion vector of the target partition.

A video decoding device of Modified Example 3" is identical to the video decoding device 2 of the embodiment except that the video decoding device of Modified Example 3" employs the prediction vector candidate selecting section 317" instead of the prediction vector candidate selecting section 314.

Hence, encoded data with high encoding efficiency can be encoded by use of the video decoding device of Modified Example 3".

### [Modified Example 4]

The following description will discuss a video encoding device of Modified Example 4. The video encoding device of Modified Example 4 employs a prediction vector candidate selecting section 318, instead of the prediction vector candidate selecting section 314 of the video encoding device 1. The configuration of the video encoding device of Modified Example 4 other than the configuration of the prediction vector candidate selecting section 318 is similar to the configuration of the video encoding device 1 of the embodiment.

The prediction vector candidate selecting section 318 (i) selects one of a second spatial prediction vector candidate #312 and a temporal prediction vector candidate #313 in accordance with (a) a size of a target partition and (b) a length of a motion vector assigned to the target partition and (ii) sets a selected prediction vector candidate as a secondary prediction vector candidate #318.

Specifically, the prediction vector candidate selecting section 318 selects the temporal prediction vector candidate #313, in a case where (i) the size of the target partition is not smaller than a predetermined reference size and (ii) the length of the motion vector assigned to the target partition is not greater than a predetermined reference length. In contrast, the prediction vector candidate selecting section 318 selects the second spatial prediction vector candidate #312, in cases other than the above case.

As early described, the temporal prediction vector candidate #313 is similar to a motion vector to be assigned to the target partition, in the case where the size of the target partition is large. The temporal prediction vector candidate #313 is also similar to the motion vector to be assigned to the target partition, even in the case where the length of the motion vector assigned to the target partition is small. In other words, a predictive accuracy of the temporal prediction vector candidate #313 is high, in the case where the size of the target partition is large. The predictive accuracy of the temporal prediction vector candidate #313 is also high even in the case where the length of the motion vector assigned to the target partition is small.

The above configuration makes it possible to further improve the encoding efficiency.

Note that a motion vector redundancy reducing section 19 of Modified Example 4 carries out an operation substantially identical to that of the motion vector redundancy reducing section 19 of the embodiment, except the above-described point.

A video decoding device of Modified Example 4 employs the prediction vector candidate selecting section 318, instead of the prediction vector candidate selecting section 314 of the video decoding device 2 of the embodiment. That is, the video decoding device of Modified Example 4 selects a temporal prediction vector candidate #313, in a case where (i) a size of a target partition is not smaller than a predetermined reference size and (ii) a length of a motion vector assigned to the target partition is not greater than a predetermined reference length. In contrast, the video decoding device of Modified Example 4 selects a second spatial prediction vector candidate #312, in cases other than the above case.

Alternatively, the prediction vector candidate selecting section 318 can be configured to (i) select one of a second spatial prediction vector candidate #312 and a temporal prediction vector candidate #313 in accordance with (a) a size of a target partition or (b) a length of a motion vector assigned to the target partition and (ii) set a selected prediction vector candidate as a secondary prediction vector candidate #315.

Specifically, the prediction vector candidate selecting section 315 selects the temporal prediction vector candidate #313, in a case where (i) the size of the target partition is not smaller than the predetermined reference size or (ii) the length of the motion vector assigned to the target partition is not greater than the predetermined reference length. In contrast, the prediction vector candidate selecting section 318 selects the second spatial prediction vector candidate #312, in cases other than the above case.

Alternatively, the prediction vector candidate selecting section 318 can be configured to select one of the second spatial prediction vector candidate #312 and the temporal prediction vector candidate #313 in accordance with one of (i) a length of a first spatial prediction vector candidate #311, (ii) a length of the second spatial prediction vector candidate #312 and (iii) a length of the temporal prediction vector candidate #313, instead of in accordance with the length of the motion vector assigned to the target partition.

Alternatively, the prediction vector candidate selecting section 318 can also be configured to (i) select the temporal prediction vector candidate #313, in a case where the length of the motion vector assigned to the target partition is not greater than a length of a side of the target partition, whereas (ii) select the second spatial prediction vector candidate #312, in a case where the length of the motion vector assigned to the target partition is greater than the length of the side of the target partition.

The above configuration makes it possible to select a proper secondary prediction vector candidate, without referring to the predetermined reference value.

### (Additional Description 1)

According to the embodiment and Modified Examples, the prediction vector candidate selecting section 314 (such as 315, 316, 317 or 318) is configured to select one of a second spatial prediction vector candidate #312 and a temporal prediction vector candidate #313. Alternatively, the prediction vector candidate selecting section 314 (such as 315, 216, 317 or 318) can be configured to select both the second spatial prediction vector candidate #312 and the temporal prediction vector candidate #313. Specifically, the prediction vector selecting section 314 selects both the second spatial prediction vector candidate #312 and the temporal prediction vector candidate #313, in a case where it is determined that a predictive accuracy of the temporal prediction vector candidate #313 of a target partition is high. In contrast, the prediction vector candidate selecting section 314 selects the second spatial prediction vector candidate #312, in a case where it is determined that the predictive accuracy of the temporal prediction vector candidate #313 of the target partition is low.

More specifically, the prediction vector candidate selecting section 314 selects both the second spatial prediction vector candidate #312 and the temporal prediction vector candidate #313, in a case where the target partition has a size not smaller than a predetermined reference size. In contrast, the prediction vector candidate selecting section 314 selects the second spatial prediction vector candidate #312, in a case where the target partition has a size smaller than the predetermined reference size.

As will be described in the following Additional Description 3, in particular in a skip block, a spatial correlation of movements is high. It is therefore preferable to simultaneously select (i) the temporal prediction vector candidate #313 and (ii) the second spatial prediction vector candidate #312, in the case where the predictive accuracy of the temporal prediction vector candidate #313 is determined to be high.

It is also preferable to select (i) the temporal prediction vector candidate #313 and (ii) the second spatial prediction vector candidate #312. This is because an image quality can be expected to be greatly improved by an increase in the number of prediction vectors to be selected, in the case where the target partition has a large size as compared with a case where the target partition has a small size.

As described in Modified Examples 1 through 4, it is also suitable to estimate and determine a predictive accuracy of a temporal prediction vector, in accordance with (i) a frame distance, (ii) a type of a frame and a frame structure, (iii) a length of a motion vector, or (iv) the length of the motion vector and a size of a target partition.

### (Additional Description 2)

According to the embodiment and Modified Examples 1 through 4, each of (i) the prediction vector selecting section 32 of the encoding device and (ii) the prediction vector determining section 35 of the decoding device is configured to select the first spatial prediction vector #311 and the secondary prediction vector candidate #314. However, the prediction vector selecting section 32 and the prediction vector determining section 35 are not limited to such a configuration. Alternatively, each of the prediction vector selecting section 32 and the prediction vector determining section 35 can be configured to employ, as a prediction vector candidate to be used in each of the prediction vector selecting section 32 and the prediction vector determining section 35, the secondary prediction vector candidate #314 (which possibly includes a plurality of secondary prediction vector candidates #314 as described in Additional Description 1) as it is.

According to the configuration, a flag #19b, indicative of which one of the prediction vectors has been used to create a difference motion vector #19a, is not required in a case where only one secondary prediction vector candidate #314 exists. In contrast, the flag #19b is required in a case where a plurality of secondary prediction vector candidates #314 exist.

It is preferable, in the configuration, that a second spatial prediction vector #312 for use in calculation of the secondary prediction vector candidate #314 be a median of motion vectors assigned to respective of (a) a left partition adjacent to a left side of a target partition, (b) an upper partition adjacent to an upper side of the target partition, and (c) an upper right partition adjacent to a right side of the upper partition.

The following is a more concrete example configuration. Namely, a temporal prediction vector #313 is employed as a prediction vector candidate, in a case where a predictive accuracy of the temporal prediction vector #313 is high. In contrast, the second spatial prediction vector #312 (the median) is employed as a prediction vector candidate, in a case where the predictive accuracy of the temporal prediction vector #313 is not high.

### (Additional Description 3)

According to the embodiment and Modified Examples 1 through 4, a first spatial prediction vector candidate #311 is always employed, in a skip block, as a secondary prediction vector candidate #314. They are not, however, limited to this. Even in the skip block, as with blocks other than the skip block, one of a second spatial prediction vector candidate #312 and a temporal prediction vector candidate #313 can be selected as the secondary prediction vector candidate #314 in accordance with a determination of a predictive accuracy of the temporal prediction vector candidate #313. Alternatively, both the second spatial prediction vector candidate #312 and the temporal prediction vector candidate #313 can be selected as has been described in Additional Description 2.

It appears to be suitable that the temporal prediction vector candidate #313 is one of options in the skip block, in a case where a predictive accuracy of the temporal prediction vector candidate #313 is high. Examples of such a case encompass a case where a size of a target partition is not smaller than a reference size. Further, the temporal prediction vector candidate #313 can be suitably selected as one of options in the skip block. This is because an image quality can be expected to be greatly improved by an increase in the number of prediction vectors to be selected, in the case where the size of the target partition is not smaller than the reference size, as compared with a case where the size of the target partition is smaller than the reference size.

The following is a more concrete example configuration. Namely, in the skip block, a motion vector candidate is selected from the first spatial prediction vector candidate #311, the second spatial prediction vector candidate #312, and the temporal prediction vector candidate #313, in the case where a size of the target partition is not smaller than a reference size. In contrast, the motion vector candidate is selected from the first spatial prediction vector candidate #311 and the second spatial prediction vector candidate #312, in the case where the size of the target partition is smaller than the reference size. In a block other than the skip block, a motion vector candidate is selected from a first spatial prediction vector candidate #311 and a temporal prediction vector candidate #313, in a case where a size of a target partition is not smaller than a reference size. In contrast, the motion vector candidate is selected from the first spatial prediction vector candidate #311 and a second spatial prediction vector candidate #312, in a case where the size of the target partition is smaller than the reference size.

Though repeatedly described, the determination made in accordance with the size of the target partition is realized by determining the predictive accuracy of the temporal prediction vector candidate #313. Alternatively, the determination can be realized by other determinations such as determination made in accordance with a frame distance.

### (Additional Description 4)

It appears that a probability that a determination made in accordance with the predictive accuracy of the temporal prediction vector candidate #313 is correct, depends on an employed sequence. As such, it is also preferable to encode, in encoded data, information indicative of which determination has been employed. Specifically, it is preferable to encode information indicative of which one of a partition size, a motion vector length, a frame distance, and a frame type has been used to make a determination. Like an example described in Modified Example 3" and Modified Example 4, it is appropriate to combine a plurality of determinations, instead of a single determination. In this case, information indicative of which determinations are combined is encoded. A decoding device decodes information indicative of which determination/combination of determinations is employed, and then utilizes decoded information so as to (i) calculate a prediction motion vector candidate and (ii) decode a flag #19b.

### (Additional Description 5)

It is preferable that the video encoding device include: first calculating means for setting the median as the first prediction vector candidate that becomes a prediction vector candidate to be assigned to the target partition; second calculating means for setting the motion vector assigned to the left partition as the second prediction vector candidate that becomes the prediction vector candidate to be assigned to the target partition; third calculating means for setting, as the third prediction vector candidate that becomes the prediction vector candidate to be assigned to the target partition, the motion vector assigned to the collocate partition identical in location to the target partition of the encoded frame; first selecting means for selecting one of the second prediction vector candidate and the third prediction vector candidate in accordance with the predictive accuracy of the third prediction vector candidate; and second selecting means for (i) selecting, in accordance with the encoding cost, one of the first prediction vector candidate and a prediction vector candidate selected by the first selecting means and (ii) setting, as the prediction vector to be assigned to the target partition, a prediction vector candidate selected by the second selecting means.

According to the configuration, the video encoding device includes the first selecting means for selecting one of the second prediction vector candidate and the third prediction vector candidate in accordance with the predictive accuracy of the third prediction vector candidate. Therefore, the video encoding device can select one of the second prediction vector candidate and the third prediction vector candidate in accordance with the predictive accuracy of the third prediction vector candidate.

The above-configured video encoding device of the present invention includes the second selecting means for (i) selecting, in accordance with the encoding cost, one of the first prediction vector candidate or the prediction vector candidate selected by the first selecting means and (ii) setting, as the prediction vector to be assigned to the target partition, the prediction vector candidate selected by the second selecting means. Therefore, the video encoding device of the present invention can create encoded data with high encoding efficiency even in a case where (i) the predictive accuracy of the third prediction vector candidate is lowered or (ii) an encoding cost of the first prediction vector candidate is increased.

It is preferable that the second selecting means (i) selects the first prediction vector candidate or the prediction vector candidate selected by the first selecting means, whichever is lower in encoding cost and (ii) sets, as the prediction vector to be assigned to the target partition, a selected one of the first prediction vector candidate and the prediction vector candidate.

According to the configuration, the second selecting means can (i) select the first prediction vector candidate or the prediction vector candidate selected by the first selecting means, whichever is lower in encoding cost and (ii) set, as the prediction vector to be assigned to the target partition, the selected one of the first prediction vector candidate and the prediction vector candidate. This brings about a further effect that a prediction vector with high encoding efficiency can be created.

It is preferable that the first selecting means selects the third prediction vector candidate in a case where the target partition has a size not smaller than a predetermined reference size, whereas selects the second prediction vector candidate in a case where the target partition has a size smaller than the predetermined reference size.

Generally, a predictive accuracy of a third prediction vector candidate tends to be lower in a case where a target partition has a size smaller than a predetermined reference size. In contrast, the predictive accuracy of the third prediction vector candidate tends to be higher in the case where the target partition has a size not smaller than the predetermined reference size.

According to the configuration, it is possible (i) to select the third prediction vector candidate in the case where the target partition has the size not smaller than the predetermined reference size, whereas (ii) to select the second prediction vector candidate in the case where the target partition has the size smaller than the predetermined reference size. This brings about a further effect that a prediction vector candidate with high encoding efficiency can be selected even in the case where (a) the target partition has the size smaller than the predetermined reference size or (b) the target partition has the size not smaller than the predetermined reference size.

It is preferable that the first selecting means selects the third prediction vector candidate in a case where a motion vector assigned to the target partition is not longer than a predetermined length, whereas selects the second prediction vector candidate in a case where the motion vector assigned to the target partition is longer than the predetermined length.

Generally, the predictive accuracy of the third prediction vector tends to be higher in a case where a motion vector assigned to a target partition is shorter. In contrast, the predictive accuracy of the third prediction vector tends to be lower in the case where the motion vector assigned to the target partition is longer.

According to the configuration, it is possible (i) to select the third prediction vector candidate in the case where the motion vector assigned to the target partition is not longer than the predetermined length, whereas (ii) to select the second prediction vector candidate in the case where the motion vector assigned to the target partition is longer than the predetermined length. This brings about a further effect that a prediction vector candidate with high encoding efficiency can be selected even in the case where (a) the motion vector assigned to the target partition is not longer than the predetermined length or (b) the motion vector assigned to the target partition is longer than the predetermined length.

It is preferable that the first selecting means selects the third prediction vector candidate in a case where a frame distance between a frame containing the target partition and a frame containing the collocate partition is not longer than a predetermined reference frame distance, whereas selects the second prediction vector candidate in a case where the frame distance between the frame containing the target partition and the frame containing the collocate partition is longer than the predetermined reference frame distance.

Generally, the predictive accuracy of the third prediction vector candidate tends to be higher in a case where a frame distance between a frame containing a target partition and a frame containing a collocate partition is shorter. In contrast, the predictive accuracy of the third prediction vector candidate tends to be lower in a case where the frame distance between the frame containing the target partition and the frame containing the collocate partition is longer.

According to the configuration, it is possible (i) to select the third prediction vector candidate in the case where the frame distance between the frame containing the target partition and the frame containing the collocate partition is not longer than the predetermined reference frame distance, whereas (ii) to select the second prediction vector candidate in the case where the frame distance between the frame containing the target partition and the frame containing the collocate partition is longer than the predetermined reference frame distance. This brings about a further effect that a prediction vector candidate with high encoding efficiency can be selected even in the case where (a) the frame distance between the frame containing the target partition and the frame containing the collocate partition is longer than the predetermined reference frame distance or (b) the frame distance between the frame containing the target partition and the frame containing the collocate partition is not longer than the predetermined reference frame distance.

It is preferable that the first selecting means selects the second prediction vector candidate in a case where at least one of a frame containing the target partition and a frame containing the collocate partition belongs to a picture group structure made up of layered B pictures, whereas selects the third prediction vector candidate in a case where neither the frame containing the target partition nor the frame containing the collocate partition belongs to the picture group structure made up of the layered B pictures.

Generally, the predictive accuracy of the third prediction vector candidate tends to be lower in a case where at least one of a frame containing a target partition and a frame containing a collocate partition belongs to a picture group structure made up of layered B pictures.

According to the configuration, it is possible (i) to select the second prediction vector candidate in the case where the at least one of the frame containing the target partition and the frame containing the collocate partition belongs to the picture group structure made up of the layered B pictures, whereas (ii) to select the third prediction vector candidate in the case where neither the frame containing the target partition nor the frame containing the collocate partition belongs to the picture group structure made up of the layered B pictures. This brings about a further effect that a prediction vector candidate with high encoding efficiency can be selected even in the case where the at least one of the frame containing the target partition and the frame containing the collocate partition belongs to the picture group structure made up of the layered B pictures.

It is preferable that the first selecting means selects the third prediction vector candidate in a case where (i) the target partition has a size not smaller than a predetermined reference size and (ii) a motion vector assigned to the target partition is not longer than a predetermined length, whereas, otherwise, selects the second prediction vector candidate.

Generally, the predictive accuracy of the third prediction vector tends to be lower in a case where a target partition has a size smaller than a predetermined reference size. In contrast, the predictive accuracy of the third prediction vector tends to be higher in a case where the target partition has a size not smaller than the predetermined reference size. Further, generally, the predictive accuracy of the third prediction vector tends to be higher in a case where a motion vector assigned to the target partition is not longer than a predetermined length. In contrast, the predictive accuracy of the third prediction vector tends to be lower in a case where the motion vector assigned to the target partition is longer than the predetermined length.

According to the configuration, it is possible (i) to select the third prediction vector candidate in the case where (a) the target partition has the size not smaller than the predetermined reference size and (b) the motion vector assigned to the target partition is not longer than the predetermined length, whereas, otherwise, (ii) to select the second prediction vector candidate. This brings about a further effect that a prediction vector candidate with higher encoding efficiency can be selected even in one of the cases where (I) the target partition has the size smaller than the predetermined reference size, (II) the target partition has the size not smaller than the predetermined reference size, (III) the motion vector assigned to the target partition is not longer than the predetermined length and (IV) the motion vector assigned to the target partition is longer than the predetermined length.

It is preferable that the first selecting means selects the third prediction vector candidate in a case where the target partition has a size not smaller than a predetermined reference size, whereas selects the second prediction vector candidate in a case where the target partition has a size smaller than the predetermined reference size.

According to the configuration, it is possible (i) to select the third prediction vector candidate in the case where the target partition has the size not smaller than the predetermined reference size, whereas (ii) to select the second prediction vector candidate in the case where the target partition has the size smaller than the predetermined reference size. This brings about a further effect that a prediction vector candidate with higher encoding efficiency can be selected with no use of a flag indicative of which one of the second prediction vector candidate and the third prediction vector candidate should be selected.

It is preferable to configure the decoding device of the present invention such that the first selecting means selects the third prediction vector candidate in a case where a motion vector assigned to the target partition is not longer than a predetermined length, whereas selects the second prediction vector candidate in a case where the motion vector assigned to the target partition is longer than the predetermined length.

According to the configuration, it is possible (i) to select the third prediction vector candidate in the case where the motion vector assigned to the target partition is not longer than the predetermined length, whereas (ii) to select the second prediction vector candidate in the case where the motion vector assigned to the target partition is longer than the predetermined length. This brings about a further effect that a prediction vector candidate with high encoding efficiency can be selected with no use of a flag indicative of which one of the second prediction vector candidate and the third prediction vector candidate should be selected.

It is preferable to configure the decoding device of the present invention such that the first selecting means selects the third prediction vector candidate in a case where a frame distance between a frame containing the target partition and a frame containing the collocate partition is not longer than a predetermined reference frame distance, whereas selects the second prediction vector candidate in a case where the frame distance between the frame containing the target partition and the frame containing the collocate partition is longer than the predetermined reference frame distance.

According to the configuration, it is possible (i) to select the third prediction vector candidate in the case where the frame distance between the frame containing the target partition and the frame containing the collocate partition is not longer than the predetermined reference frame distance, whereas (ii) to select the second prediction vector candidate in the case where the frame distance between the frame containing the target partition and the frame containing the collocate partition is longer than the predetermined reference frame distance. This brings about a further effect that a prediction vector candidate with high encoding efficiency can be selected with no use of a flag indicative of which one of the second prediction vector candidate and the third prediction vector candidate should be selected.

It is preferable to configure the decoding device of the present invention such that the first selecting means select the second prediction vector candidate in a case where the encoded data contains a flag indicating that an encoded image belongs to a picture group structure made up of layered B pictures.

According to the configuration, it is possible to select the second prediction vector candidate in the case where the encoded data contains the flag indicating that the encoded image belongs to the picture group structure made up of the layered B pictures. This brings about an effect that encoded data created at a high encoding efficiency can be decoded even in a case where the encoded image belongs to the picture group structure made up of the layered B pictures.

It is preferable to configure the decoding device of the present invention such that the first selecting means selects the third prediction vector candidate in a case where (i) the target partition has a size not smaller than a predetermined reference size and (ii) a motion vector assigned to the target partition is not longer than a predetermined length, whereas, otherwise, selects the second prediction vector candidate.

According to the configuration, it is possible (i) to select the third prediction vector candidate in the case where (a) the target partition has the size not smaller than the predetermined reference size and (b) the motion vector assigned to the target partition is not longer than the predetermined length, whereas, otherwise, (ii) to select the second prediction vector candidate. This brings about a further effect that a prediction vector candidate with high encoding efficiency can be selected with no use of a flag indicative of which one of the second prediction vector candidate and the third prediction vector candidate should be selected.

The present invention is not limited to the description of the embodiments above, and can therefore be modified by a skilled person in the art within the scope of the claims. Namely, an embodiment derived from a proper combination of technical means disclosed in different embodiments is encompassed in the technical scope of the present invention.

### Industrial Applicability

The present invention is suitably applicable to a video encoding device for encoding a video. The present invention is also suitably applicable to a video decoding device for restoring a video on the basis of encoded data.

### Reference Signs List

- 1:: video encoding device
- 11:: conversion/quantization section
- 12:: variable length encoding section
- 13:: inverse quantization/inverse conversion section
- 14:: buffer memory
- 15:: intra prediction image creating section
- 16:: prediction image creating section
- 17:: motion vector estimating section
- 18:: prediction method controlling section
- 19:: motion vector redundancy reducing section
- 21:: adder
- 22:: subtracter
- 31:: prediction vector candidate creating section
- 311:: first spatial prediction vector calculating section (first calculating means)
- 312:: second spatial prediction vector calculating section (second calculating means)
- 313:: temporal prediction vector calculating section (third calculating means)
- 314:: prediction vector candidate selecting section (first selecting means)
- 32:: prediction vector selecting section (second selecting means)
- 33:: PMV flag creating section
- 34:: subtracter
- 2:: video decoding device
- 24:: motion vector restoring section

## Claims

1. vector restoring section A video encoding device for encoding, together with a video, a difference vector between respective prediction vectors and respective motion vectors, the prediction vectors and the motion vectors being assigned to respective partitions into which each of frames, of which the video is made up, is divided,
the prediction vector being a prediction vector selected from one of a first prediction vector candidate and a prediction vector candidate in accordance with an encoding cost,
the first prediction vector candidate being a median of motion vectors assigned to respective of a left partition adjacent to a left side of a target partition, an upper partition adjacent to an upper side of the target partition, and an upper right partition adjacent to a right side of the upper partition, the prediction vector candidate being a prediction vector candidate selected from one of a second prediction vector candidate and a third prediction vector candidate in accordance with a predictive accuracy of the third prediction vector candidate, the second prediction vector candidate being the motion vector assigned to the left partition, the third prediction vector candidate being a motion vector assigned to a collocate partition identical in location to the target partition of an encoded frame.

2. on of an encoded frame. The video encoding device as set forth in claim 1, comprising:
first calculating means for setting the median as the first prediction vector candidate that becomes a prediction vector candidate to be assigned to the target partition;
second calculating means for setting the motion vector assigned to the left partition as the second prediction vector candidate that becomes the prediction vector candidate to be assigned to the target partition;
third calculating means for setting, as the third prediction vector candidate that becomes the prediction vector candidate to be assigned to the target partition, the motion vector assigned to the collocate partition identical in location to the target partition of the encoded frame;
first selecting means for selecting one of the second prediction vector candidate and the third prediction vector candidate in accordance with the predictive accuracy of the third prediction vector candidate; and
second selecting means for (i) selecting, in accordance with the encoding cost, one of the first prediction vector candidate and a prediction vector candidate selected by the first selecting means and (ii) setting, as the prediction vector to be assigned to the target partition, a prediction vector candidate selected by the second selecting means.

3. te selected by the second selecting means. The video encoding device as set forth in claim 2, wherein:
the second selecting means (i) selects the first prediction vector candidate or the prediction vector candidate selected by the first selecting means, whichever is lower in encoding cost and (ii) sets, as the prediction vector to be assigned to the target partition, a selected one of the first prediction vector candidate and the prediction vector candidate.

4. te. The video encoding device as set forth in claim 2 or 3, wherein:
the first selecting means selects the third prediction vector candidate in a case where the target partition has a size not smaller than a predetermined reference size, whereas selects the second prediction vector candidate in a case where the target partition has a size smaller than the predetermined reference size.

5. ce size. The video encoding device as set forth in claim 2 or 3, wherein:
the first selecting means selects the third prediction vector candidate in a case where a motion vector assigned to the target partition is not longer than a predetermined length, whereas selects the second prediction vector candidate in a case where the motion vector assigned to the target partition is longer than the predetermined length.

6. er than the predetermined length. The video encoding device as set forth in claim 2 or 3, wherein:
the first selecting means selects the third prediction vector candidate in a case where a frame distance between a frame containing the target partition and a frame containing the collocate partition is not longer than a predetermined reference frame distance, whereas selects the second prediction vector candidate in a case where the frame distance between the frame containing the target partition and the frame containing the collocate partition is longer than the predetermined reference frame distance.

7. rmined reference frame distance. The video encoding device as set forth in claim 2 or 3, wherein:
the first selecting means selects the second prediction vector candidate in a case where at least one of a frame containing the target partition and a frame containing the collocate partition belongs to a picture group structure made up of layered B pictures, whereas selects the third prediction vector candidate in a case where neither the frame containing the target partition nor the frame containing the collocate partition belongs to the picture group structure made up of the layered B pictures.

8. ered B pictures. The video encoding device as set forth in claim 2 or 3, wherein:
the first selecting means selects the third prediction vector candidate in a case where (i) the target partition has a size not smaller than a predetermined reference size and (ii) a motion vector assigned to the target partition is not longer than a predetermined length, whereas, otherwise, selects the second prediction vector candidate.

9. prediction vector candidate. A video decoding device for decoding encoded data obtained by encoding, together with a video, a difference vector between respective prediction vectors and respective motion vectors, the prediction vectors and the motion vectors being assigned to respective partitions into which each of frames, of which the video is made up, is divided,
said video decoding device, comprising:
first calculating means for setting, as a first prediction vector candidate that becomes a prediction vector candidate to be assigned to a target partition, a median of motion vectors assigned to respective of a left partition adjacent to a left side of the target partition, an upper partition adjacent to an upper side of the target partition, and an upper right partition adjacent to a right side of the upper partition;
second calculating means for setting, as a second prediction vector candidate that becomes the prediction vector candidate to be assigned to the target partition, the motion vector assigned to the left partition;
third calculating means for setting, as a third prediction vector candidate that becomes the prediction vector candidate to be assigned to the target partition, a motion vector assigned to a collocate partition identical in location to the target partition of a decoded frame;
first selecting means for selecting one of the second prediction vector candidate and the third prediction vector candidate in accordance with a predictive accuracy of the third prediction vector candidate; and
second selecting means for (i) selecting, in accordance with a flag contained in the encoded data, one of the first prediction vector candidate and a prediction vector candidate selected by the first selecting means and (ii) setting, as the prediction vector to be assigned to the target partition, a selected one of the first prediction vector candidate and the prediction vector candidate.

10. on vector candidate. The video decoding device as set forth in claim 9, wherein:
the first selecting means selects the third prediction vector candidate in a case where the target partition has a size not smaller than a predetermined reference size, whereas selects the second prediction vector candidate in a case where the target partition has a size smaller than the predetermined reference size.

11. e size. The video decoding device as set forth in claim 9, wherein:
the first selecting means selects the third prediction vector candidate in a case where a motion vector assigned to the target partition is not longer than a predetermined length, whereas selects the second prediction vector candidate in a case where the motion vector assigned to the target partition is longer than the predetermined length.

12. r than the predetermined length. The video decoding device as set forth in claim 9, wherein:
the first selecting means selects the third prediction vector candidate in a case where a frame distance between a frame containing the target partition and a frame containing the collocate partition is not longer than a predetermined reference frame distance, whereas selects the second prediction vector candidate in a case where the frame distance between the frame containing the target partition and the frame containing the collocate partition is longer than the predetermined reference frame distance.

13. mined reference frame distance. The video decoding device as set forth in claim 9, wherein:
the first selecting means selects the second prediction vector candidate in a case where the encoded data contains a flag indicating that an encoded image belongs to a picture group structure made up of layered B pictures.

14. ructure made up of layered B pictures. The video decoding device as set forth in claim 9, wherein:
the first selecting means selects the third prediction vector candidate in a case where (i) the target partition has a size not smaller than a predetermined reference size and (ii) a motion vector assigned to the target partition is not longer than a predetermined length, whereas, otherwise, selects the second prediction vector candidate.

15. rediction vector candidate. A data structure of encoded data obtained by encoding, together with a video, a difference vector between respective prediction vectors and respective motion vectors, the prediction vectors and the motion vectors being assigned to respective partitions into which each of frames, of which the video is made up, is divided,
the prediction vector being a prediction vector selected from one of a first prediction vector candidate and a prediction vector candidate in accordance with an encoding cost,
the first prediction vector candidate being a median of motion vectors assigned to respective of a left partition adjacent to a left side of a target partition, an upper partition adjacent to an upper side of the target partition, and an upper right partition adjacent to a right side of the upper partition, the prediction vector candidate being a prediction vector candidate selected from one of a second prediction vector candidate and a third prediction vector candidate in accordance with a predictive accuracy of the third prediction vector candidate, the second prediction vector candidate being the motion vector assigned to the left partition, the third prediction vector candidate being a motion vector assigned to a collocate partition identical in location to the target partition of an encoded frame.
